# EUROPEAN PATENT APPLICATION

(11) **EP 4 496 298 A1**
(43) Date of publication of application: **22.01.2025**
(21) Application number: 23792096.2
(22) Date of filing: 12.04.2023
(51) Int. Cl.: H04M 1/02, H04M 1/72454, G06F 3/04847, G06T 13/80, G06F 3/04817, G06F 3/0482

(54) **FLEXIBLE DISPLAY BACKGROUND SCREEN DISPLAY METHOD AND ELECTRONIC DEVICE**

(30) Priority: 19.04.2022 KR 20220048436; 23.06.2022 KR 20220077003
(71) Applicant: Samsung Electronics Co., Ltd, Suwon-si, Gyeonggi-do 16677 (KR)
(72) Inventor: LEE, Hwajun, Suwon-si, Gyeonggi-do 16677 (KR); PARK, Miji, Suwon-si, Gyeonggi-do 16677 (KR); KIM, Woohyun, Suwon-si, Gyeonggi-do 16677 (KR); PARK, Jaewon, Suwon-si, Gyeonggi-do 16677 (KR); OH, Boa, Suwon-si, Gyeonggi-do 16677 (KR); YU, Hyemi, Suwon-si, Gyeonggi-do 16677 (KR); LEE, Minkyung, Suwon-si, Gyeonggi-do 16677 (KR); LEE, Hyunjun, Suwon-si, Gyeonggi-do 16677 (KR); JUNG, Yusin, Suwon-si, Gyeonggi-do 16677 (KR)
(74) Representative: Nederlandsch Octrooibureau
(86) International application number: PCT/KR2023/004947
(87) International publication number: WO 2023/204518

(57) **Abstract**

Various embodiments of the present disclosure may include: a flexible display; a first housing disposed in a first area of the flexible display; a second housing slidable with respect to the first housing and supporting a second area of the flexible display; a memory; and a processor operatively connected to at least one of the flexible display or the memory. According to an embodiment, the processor may operate to: determine a state of the slide electronic device in response to an event for displaying a background screen; display the background screen on the basis of the state of the slide electronic device; detect a state change of the slide electronic device; provide a transition effect to the background screen during the state change of the slide electronic device; or display different background screens in response to the state change of the slide electronic device. Various embodiments are possible.

## Description

### [Technical Field]

Various embodiments of the disclosure relate to a flexible display background screen display method and an electronic device.

### [Background Art]

In line with development of digital technologies, there has been widespread use of various types of electronic devices such as mobile communication terminals, personal digital assistants (PDAs), electronic organizers, smartphones, tablet personal computers (PCs), wearable devices, laptop PCs, or Internet of things (IoT) devices. In order to support and enhance functions of such electronic devices, the hardware part and/or software part of the electronic devices have been developed continuously.

There has been a gradual increase in the screen size of displays of electronic devices, which have limited sizes, and electronic devices have been designed to provide various services (or functions) to users through large screens. As an example, electronic devices may have new form factors such as rollable devices and/or slidable devices. An electronic device may be equipped with a flexible display or a slidable display, and at least a part of the display may be rolled or unfolded and then used. For example, an electronic device may be implemented such that the screen thereof can be expanded or reduced in a sliding type. For example, a part of the flexible display may be moved out of the inner space of the electronic device as if sliding, or moved into the inner space of the electronic device, thereby expanding or reducing the screen.

As a result of such new form factors of electronic devices, there have been increasing demands for development of corresponding user interfaces (UIs) and operations thereof. For example, in line with new form factors, there have been increasing demands for UIs for providing electronic devices with background screens adaptive to state changes and operations thereof.

Electronic devices including a flexible display provide a different background screen according to a change in size of the display. For example, conventional electronic devices increase or decrease the size of background screen images as the screen is expanded or reduced, further display regions which have not been displayed as the screen is expanded, or do not display regions which have been displayed as the screen is reduced. That is, electronic devices may maintain the configuration of the background screen and may display more regions or fewer regions. Therefore, conventional electronic devices do not display the background screen so as to be changed adaptively to a change in the state of the electronic devices.

### [Disclosure of Invention]

### [Technical Problem]

Various embodiments of the disclosure provide a method and an apparatus capable of supporting a background screen adaptive to a change in the state of an electronic device including an expandable display (for example, expansion or reduction of the display).

### [Solution to Problem]

A sliding electronic device according to an embodiment of the disclosure may include a flexible display, a first housing disposed in a first region of the flexible display, a second housing configured to be able to slide with regard to the first housing and to support a second region of the flexible display, a memory, and a processor operatively connected to at least one of the flexible display or the memory. The processor may determine a state of the sliding electronic device in response to an event for background screen display, display a background screen, based on the state of the sliding electronic device, detect a change in the state of the sliding electronic device, and provide a switching effect to the background screen during a change in the state of the sliding electronic device, or display a different background screen in response to a change in the state of the sliding electronic device. The state of the sliding electronic device may include at least one of a closed state in which the first housing is contained in an inner space of the second housing, an open state in which the first housing is exposed out of the second housing, or an intermediate state between the closed state and the open state.

A method for operating a sliding electronic device including a flexible display, a first housing disposed in a first region of the flexible display, and a second housing configured to be able to slide with regard to the first housing and to support a second region of the flexible display according to an embodiment of the disclosure may include determining a state of the sliding electronic device in response to an event for background screen display, displaying a background screen, based on the state of the sliding electronic device, detecting a change in the state of the sliding electronic device, and providing a switching effect to the background screen during a change in the state of the sliding electronic device, or displaying a different background screen in response to a change in the state of the sliding electronic device. The state of the sliding electronic device may include at least one of a closed state in which the first housing is contained in an inner space of the second housing, an open state in which the first housing is exposed out of the second housing, or an intermediate state between the closed state and the open state.

In order to solve the above-mentioned problems, various embodiments of the disclosure may include a computer-readable recording medium in which a program for executing the method by a processor is recorded.

### [Advantageous Effects of Invention]

According to various embodiments, in connection with an electronic device including an expandable display (for example, a flexible display), a background screen which is adaptive to a change in the state of the electronic device (for example, expansion or reduction of the display) and/or which is intuitive may be provided.

According to various embodiments, even during a change in the state of the electronic device, a user interface may be provided continuously such that the background screen is configured to be displayed differently according to the state change, thereby receiving the user's input through the user interface.

According to various embodiments, a change in the state of the electronic device may be divided into steps such that the background screen desired by the user can be configured differently for each state change step, thereby improving the usability of the electronic device.

According to various embodiments, the background screen may be displayed differently for each state change step of the electronic device, such as a watch type configuration, a notification viewing configuration, a home screen grid configuration, a three-dimensional character motion change, or an object location change.

According to various embodiments, if a change in the state of the electronic device is detected while displaying a first background image, a second background image obtained by applying a switching effect (for example, morphing, transparency, pushing, masking, or dissipation) to the first background image may be displayed during the state change. If the state change is completed, a third background image different from the first background image may be displayed.

According to various embodiments, a background image displayed in a display reduction state and a background image displayed in the case of a change in the state of the electronic device, or a background image displayed in a display expansion state may be provided as a preview, thereby helping the user configure the background screen according to a change in the state of the electronic device.

According to various embodiments, if a change in the state of the electronic device is detected while displaying a first background screen, an operation of calculating coordinate values according to the change in the state of the electronic device and an operation of changing and displaying objects of the background screen, based on the calculated coordinate values, may be repeatedly performed until the change in the state of the electronic device is completed. A second background screen different from the first background screen may be displayed if the change in the state of the electronic device is completed.

Various other advantageous effects identified explicitly or implicitly through the disclosure may be provided.

### [Brief Description of Drawings]

In relation to descriptions of the drawings, identical or similar components may be given identical or similar reference numerals.
FIG. 1 is a block diagram of an electronic device in a network environment according to various embodiments.
FIG. 2A and FIG. 2B illustrate the front and rear surfaces of an electronic device having a form factor according to an embodiment, which is in a closed state.
FIG. 2C and FIG. 2D illustrate the front and rear surfaces of an electronic device having a form factor according to an embodiment, which is in an open state.
FIG. 3A and FIG. 3B illustrate the front and rear surfaces of an electronic device having a form factor according to an embodiment, which is in a closed state.
FIG. 3C and FIG. 3D illustrate the front and rear surfaces of an electronic device having a form factor according to an embodiment, which is in an open state.
FIG. 4 is an exploded perspective view of an electronic device having a form factor according to an embodiment.
FIG. 5A, FIG. 5B, FIG. 5C, FIG. 5D, FIG. 5E, FIG. 5F, and FIG. 5G illustrate various example of the structure of an expandable display of an electronic device according to various embodiments.
FIG. 6 illustrates an example in which a background screen is displayed according to a change in the state of an electronic device according to various embodiments.
FIG. 7 is a flowchart illustrating a method for operating an electronic device according to various embodiments.
FIG. 8A illustrates an example of displaying a watch-type background screen according to a change in the state of an electronic device according to various embodiments.
FIG. 8B illustrates an example of configuring a watch-type background screen according to a change in the state of an electronic device according to various embodiments.
FIG. 9 is a flowchart illustrating a method for configuring a background screen of an electronic device according to various embodiments.
FIG. 10 illustrates an example of configuring a background screen according to a change in the state of an electronic device according to various embodiments.
FIG. 11A illustrates an example of identically configuring a background screen according to a change in the state of an electronic device according to various embodiments.
FIG. 11B illustrates an example of differently configuring a background screen according to a change in the state of an electronic device according to various embodiments.
FIG. 12A and FIG. 12B illustrate an example of configuring a background screen of an electronic device according to various embodiments.
FIG. 13 is a flowchart illustrating a method for displaying a background screen according to a change in the state of an electronic device according to various embodiments.
FIG. 14 illustrates an example of providing a preview such that a different background screen is displayed according to a change in the state of an electronic device according to various embodiments.
FIG. 15 illustrates an example of differently configuring application shortcuts according to the state of an electronic device according to various embodiments.
FIG. 16 illustrates an example of differently configuring a home screen grid according to a change in the state of an electronic device according to various embodiments.
FIG. 17 is a flowchart illustrating a method for displaying background screen objects according to a change in the state of an electronic device according to various embodiments.
FIG. 18A and FIG. 18B illustrate an example of changing and displaying background screen objects according to a change in the state of an electronic device according to various embodiments.
FIG. 19 illustrates another example of changing and displaying background screen objects according to a change in the state of an electronic device according to various embodiments.
FIG. 20 is a flowchart illustrating a method for differently displaying a switching effect object of a background screen according to a change in the state of an electronic device according to various embodiments.
FIG. 21 illustrates an example of differently displaying a switching effect object of a background screen according to a change in the state of an electronic device according to various embodiments.
FIG. 22 illustrates an example of differently displaying a switching effect object of a background screen according to a change in the state of an electronic device according to various embodiments.
FIG. 23 illustrates an example of displaying a switching effect object of a background screen in a motion type according to a change in the state of an electronic device according to various embodiments.
FIG. 24 and FIG. 25 illustrate another example of differently displaying a switching effect object of a background screen according to a change in the state of an electronic device according to various embodiments.
FIG. 26 illustrates an example of differently displaying a background screen in response to a physical button according to a change in the state of an electronic device according to various embodiments.

### [Mode for the Invention]

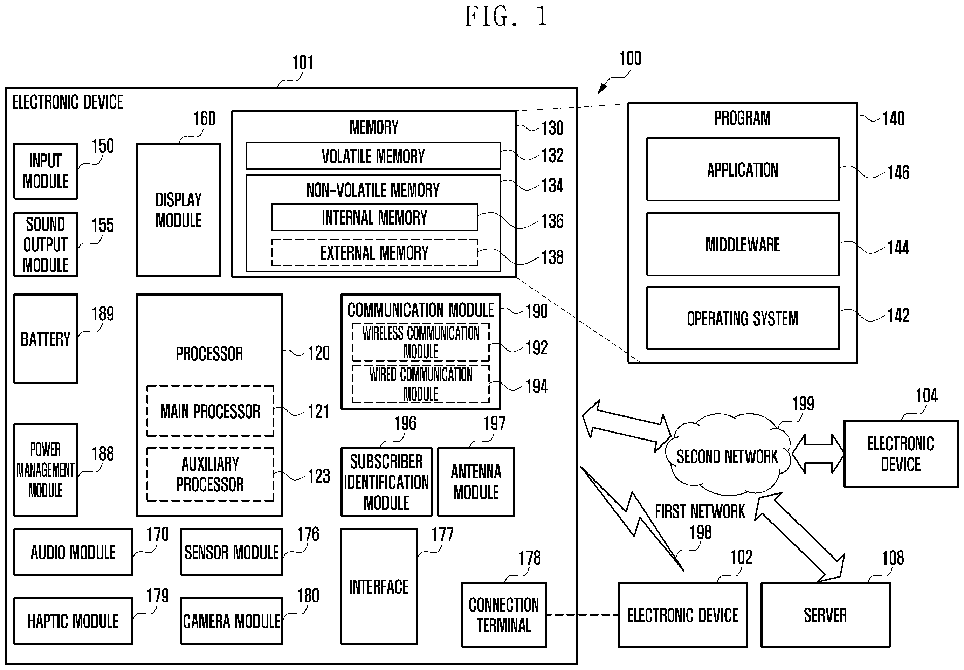

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

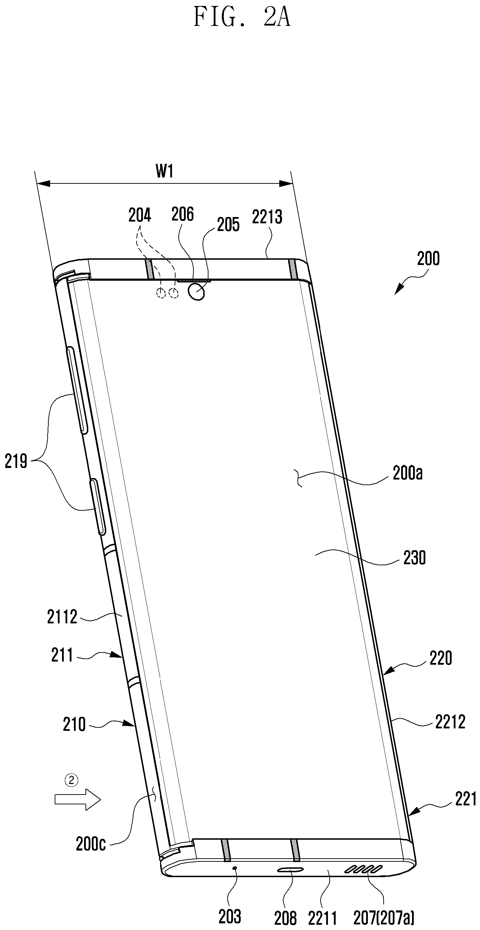

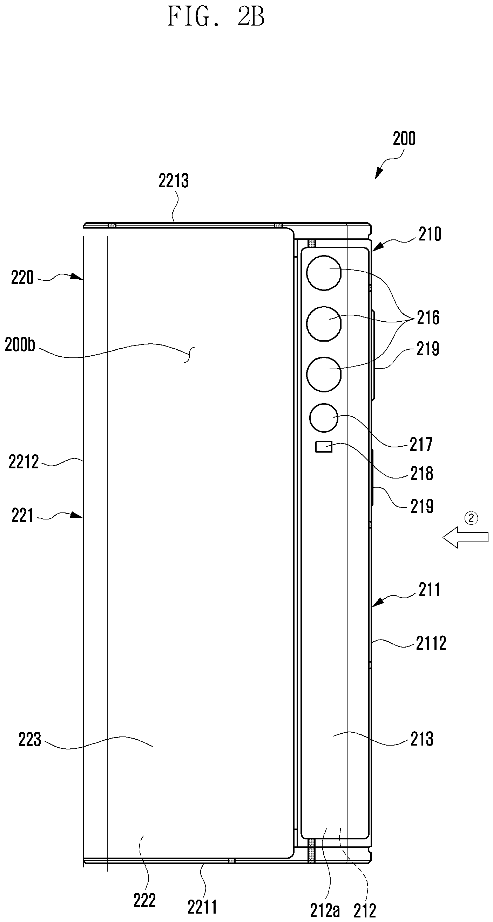

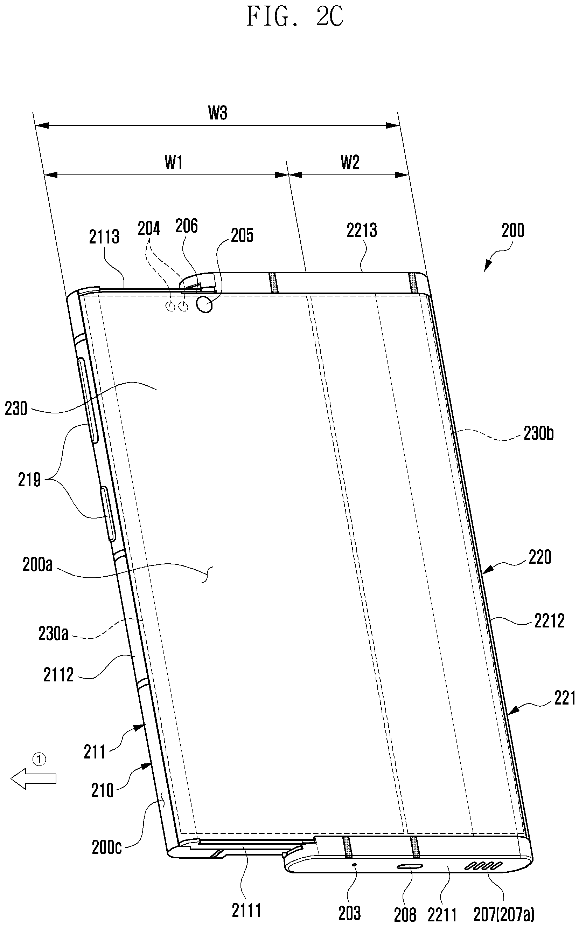

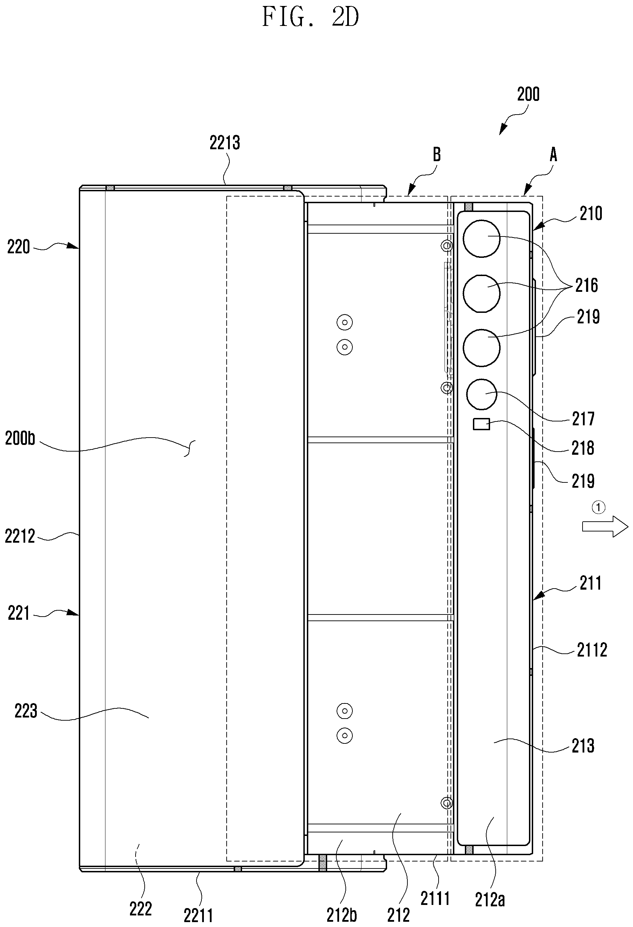

FIG. 2A and FIG. 2B illustrate the front and rear surfaces of an electronic device having a form factor according to an embodiment, which is in a closed state. FIG. 2C and FIG. 2D illustrate the front and rear surfaces of an electronic device having a form factor according to an embodiment, which is in an open state.

The electronic device 200 in FIG. 2A to FIG. 2D may be at least partially similar to the electronic device 101 in FIG. 1, may include the electronic device 101 in FIG. 1, or may further include other embodiments of the electronic device 101 in FIG. 1.

Referring to FIG. 2A to FIG. 2D, the electronic device 200 may include a first housing 210 (for example, a first housing structure or a base housing), a second housing 220 (for example, a second housing structure or a sliding housing) coupled to be able to move (for example, slide) from the first housing 210 in a designated first direction (direction ①) (for example, x-axis direction) and by a designated reciprocating distance, and a flexible display 230 (for example, an expandable display) disposed so as to be supported through at least a part of the first housing 210 and the second housing 220.

According to an embodiment, the electronic device 200 may include a bendable member or a bendable support member (for example, a multi-joint hinge module or a multi-bar assembly) which at least partially forms the same plane with at least a part of the first housing 210 in an open state (or in a slide-out state), and which is at least partially contained in the inner space of the second housing 220 in a closed state (or in a slide-in state). According to an embodiment, at least a part of the flexible display 230 may be disposed so as to be contained in the inner space of the second housing 220 while being supported by the bendable member in the closed state such that the same is invisible from the outside. According to an embodiment, at least a part of the flexible display 230 may be disposed so as to be visible from the outside while being supported by the bendable member which at least partially forms the same plane with the first housing 210 in the open state.

According to various embodiments, the electronic device 200 may include a front surface 200a (for example, a first surface), a rear surface 200b (for example, a second surface) facing in the opposite direction to the front surface 200a, and a side surface (not illustrated) surrounding the space between the front surface 200a and the rear surface 200b. According to an embodiment, the electronic device 200 may include a first housing 210 including a first side member 211 and a second housing 220 including a second side member 221. According to an embodiment, the first side member 211 may include a first side surfacer 2111 having a first length along a first direction (direction ①), a second side surface 2112 extending from the first side surface 2111 so as to have a second length larger than the first length along a substantially perpendicular direction, and a third side surface 2113 extending from the second side surface 2112 substantially in parallel to the first side surface 2111 so as to have the first length. According to an embodiment, the first side member 211 may be at least partially made of a conductive material (for example, a metal). According to an embodiment, at least a part of the first side member 211 may include a first support member 212 extending to at least a part of the inner space of the first housing 210.

According to various embodiments, the second side member 221 may include a fourth side surface 2211 at least partially corresponding to the first side surface 2111 and having a third length, a fifth side surface 2212 extending from the fourth side surface 2211 substantially in parallel to the second side surface 2112 and having a fourth length larger than the third length, and a sixth side surface 2213 extending from the fifth side surface 2212 so as to correspond to the third side surface 2113, and having the third length. According to an embodiment, the second side member 221 may be at least partially made of a conductive material (for example, a metal). According to an embodiment, at least a part of the second side member 221 may include a second support member 222 extending to at least a part of the inner space of the second housing 220. According to an embodiment, the first side surface 2111 and the fourth side surface 2211 may be coupled to be able to slide with regard to each other, and the third side surface 2113 and the sixth side surface 2213 may be coupled to be able to slide with regard to each other. According to an embodiment, the first side surface 2111 may be disposed so as to overlap at least a part of the fourth side surface 2211 in the closed state such that the same is invisible from the outside.

According to an embodiment, the third side surface 2113 may be disposed so as to overlap at least a part of the sixth side surface 2213 in the closed state such that the same is visible from the outside. According to an embodiment, at least a part of the first support member 212 may overlap the second support member 222 in the closed state, and a remaining part of the first support member 212 may be disposed so as to be visible from the outside. Therefore, the first support member 212 may include a non-overlapping portion 212a which does not overlap the second support member 222 in the closed state, and an overlapping portion 212b which overlaps the second support member 222. In some embodiments, the non-overlapping portion 212a and the overlapping portion 212b may be formed integrally. In some embodiments, the non-overlapping portion 212a and the overlapping portion 212b may be provided separately and structurally coupled.

According to various embodiments, the first housing 210 may include a first sub-space *A* corresponding to the non-overlapping portion 212a in a first space, and a second sub-space *B* corresponding to the overlapping portion 212b. According to an embodiment, the first sub-space *A* and the second sub-space *B* may be disposed so as to be at least partially connected to or separated from each other. According to an embodiment, the first sub-space *A* may be formed to have a larger space volume than the second sub-space *B*. This may result from the overlapping structure in which the second support member 222 and the first support member 212 overlap in the region corresponding to the second sub-space *B*. According to an embodiment, the electronic device 200 may include multiple electronic components (for example, a camera module 216, a sensor module 217, a flash 218, a main board (or PCB), or a battery) disposed in the first space of the first housing 210.

According to an embodiment, in the first sub-space *A*, electronic components (for example, a camera module 216, a sensor module 217, or a flash 218) which require a comparatively large mounting space (or require a comparatively large mounting thickness), or which need to operate while avoiding overlapping structures, for example, may be disposed. According to an embodiment, in the second sub-space B, electronic components (for example, a main board (or PCB)) which require a comparatively small mounting space (or require a comparatively small mounting thickness), or which may operate regardless of overlapping structures, for example, or a battery may be disposed.

According to various embodiments, the area of the front surface 200a and the rear surface 200b of the electronic device 200 may vary according to the closed state and the open state. In some embodiments, the electronic device 200 may include a first rear cover 213 disposed on at least a part of the first housing 210 on the rear surface 200b, and a second rear cover 223 disposed on at least a part of the second housing 220. According to an embodiment, the first rear cover 213 and/or the second rear cover 223 may be disposed so as to be coupled to at least a part of the first support member 212 and the second support member 213. In some embodiments, the first rear cover 213 and/or the second rear cover 223 may be formed integrally with respective side members 211 and 221.

According to an embodiment, the first rear cover 213 and/or the second rear cover 223 may be made of polymer, coated or colored glass, ceramic, metal (for example, aluminum (Al), stainless steel (STS), or magnesium), or a combination of at least two of the above materials. In some embodiments, the first rear cover 213 and/or the second rear cover 223 may extend to at least a part of respective side members 211 and 221. In some embodiments, the first rear cover 213 and the second rear cover 223 may have curved portions extending to at least a part of respective side members 211 and 221. In some embodiments, at least a part of the first support member 212 may be replaced with the first rear cover 213, and at least a part of the second support member 222 may be replaced with the second rear cover 223.

According to various embodiments, the electronic device 200 may include a flexible display 230 disposed so as to be supported by at least a part of the first housing 210 and the second housing 220. According to an embodiment, the flexible display 230 may include a first region 230a (for example, a planar portion) which is always visible from the outside, and a second region 230b (for example, a bendable portion) which extends from the first region 230a, and which is moved into at least a part of the inner space of the second housing 220 so as not to be visible from the outside in a closed state. According to an embodiment, the first region 230a may be disposed so as to be supported by the first housing 210, and the second region 230b may be disposed so as to be at least partially supported by the bendable member.

According to an embodiment, the flexible display 230 may be disposed such that, when the first housing 210 is moved out along a designated first direction (direction ①), the same extends from the first region 230a while being supported by the bendable member, forms substantially the same plane with the first region 230a, and is visible from the outside. According to an embodiment, the second region 230b of the flexible display 230 may be disposed such that, when the first housing 210 is moved in along a designated second direction (direction ②), the same is moved into the inner space of the second housing 220 and is invisible from the outside. Therefore, the display area of the flexible display 230 of the electronic device 200 may vary as the first housing 210 moves from the second housing 220 along a designated direction in a sliding type.

According to various embodiments, the first housing 210 and the second housing 220 may operate in a sliding type such that the entire width varies with regard to each other. According to an embodiment, the electronic device 200 may be configured to have a first width W1 from the second side surface 2112 to the fourth side surface 2212 in the closed state. According to an embodiment, the electronic device 200 may be configured such that a part of the bendable member which has been moved into the inner space of the second housing 210 moves so as to have an additional second width W2 in the open state, thereby having a third width W3 larger than the first width W1. For example, the flexible display 230 may have a display area substantially corresponding to the first width W1 in the closed state, and may have an increased display area substantially corresponding to the third width W3 in the open state.

According to various embodiments, a slide-out operation of the electronic device 200 may be performed through the user's manipulation. For example, the electronic device 200 may be switched from a closed state to an open state through an operation of the flexible display 230 pushed in a designated first direction (direction ①) by the user's manipulation. According to an embodiment, the electronic device 200 may be switched from an open state to a closed state through an operation of the flexible display 230 pushed in a designated second direction (direction ②) by the user's manipulation. According to an embodiment, the electronic device 200 may maintain an open state and/or a closed state as the first housing 210 is pressurized by a sliding hinge module (not illustrated) disposed between the first housing 210 and the second housing 220 in a direction in which the first housing 210 tends to move inward from the second housing 220 with reference to a designated inflection point, or in a direction in which the first housing 210 tends to move outward therefrom.

In some embodiments, the electronic device 200 may be configured such that the first housing 210 is moved outward in a first direction (direction ①) through manipulation of a locker exposed through the rear surface 200b of the electronic device 200. In some embodiments, the electronic device 200 may operate automatically through a driving mechanism (for example, a driving motor, a reducer module, and/or a gear assembly) disposed in the inner space of the first housing 210 and/or in the inner space of the second housing 220. According to an embodiment, the electronic device 200 may be configured to control operations of the second housing 220 through the driving mechanism upon detecting an event for switching the closed/open state of the electronic device 200 through a processor (for example, the processor 120 in FIG. 1). In some embodiments, the processor (for example, the processor 120 in FIG. 1) of the electronic device 200 may control the flexible display 230 so as to display visual information (for example, objects and/or application execution screens) in various manners, in response to the changed display area of the flexible display 230, according to the closed state, open state, or intermediate state (for example, free stop state included).

According to various embodiments, the electronic device 200 may include at least one of an input module 203 (for example, the input module 150 in FIG. 1), sound output modules 206 and 207 (for example, the sound output module 155 in FIG. 1), sensor modules 204 and 217, camera modules 205 and 216, a connector port 208, a key input device 219, or an indicator (not illustrated). In another embodiment, the electronic device 200 may be configured such that at least one of the above-mentioned components is omitted, or other components are additionally included.

According to various embodiments, the input module 203 may include a microphone. In some embodiments, the input module 203 may include multiple microphones disposed such that the direction of sounds can be sensed. The sound output modules 206 and 207 may include speakers. The sound output modules 206 and 207 may include a telephone speech receiver 206 and an external speaker 207. According to an embodiment, the external speaker 207 may be disposed on the second housing 220 and configured so as to transfer sounds to the outside through a first speaker hole 207a. According to an embodiment, the external speaker 207 may be disposed in the inner space of the second housing 220 such that high-quality sounds are provided to the user regardless of sliding operations of the first housing 210.

According to an embodiment, the connector port 208 may be disposed in the inner space of the second housing 220 together with the external speaker 207. In some embodiments, the connector port 208 may be disposed in the inner space of the first housing 210 and may face the outside through a connector port hole (not illustrated) formed on the second housing 220 in the closed state. In such a case, the connector port 208 may be configured to be covered such that the same is invisible from the outside through the second housing 220 in the closed state. According to an embodiment, the receive 206 may be configured so as to correspond to external environments, in the inner space of the first housing 210. In some embodiments, the sound output modules 206 and 207 may include a speaker (for example a piezoelectric speaker) which operates while any separate speaker hole is excluded.

According to various embodiments, the sensor modules 204 and 217 may generate electric signals or data values corresponding to internal operating states of the electronic device 200, or external environment states. The sensor modules 204 and 217 may include, for example, a first sensor module 204 (for example, a proximity sensor or an illuminance sensor) disposed on the front surface 200a of the electronic device 200 and/or a second sensor module 217 disposed on the rear surface 200b thereof. According to an embodiment, the first senor module 204 may be disposed on the front surface 200a of the electronic device 200 and below the flexible display 230. According to an embodiment, the first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, a barometric sensor, a magnetic sensor, an acceleration sensor, a grip sensor, a color sensor, an infrared (IR) sensor, a biometric sensor, a temperature sensor, and/or a humidity sensor.

According to various embodiments, the camera modules 205 and 216 may include a first camera module 205 disposed on the front surface 200a of the electronic device 200 and a second camera module 216 disposed on the rear surface 200b thereof. According to an embodiment, the electronic device 200 may include a flash 218 disposed near the second camera module 216. According to an embodiment, the camera modules 205 and 216 may include one or multiple lenses, an image sensor, and/or an image signal processor. According to an embodiment, the first camera module 205 may be disposed below the flexible display module 230 and configured to capture images of subjects through a part of the active region of the flexible display 230. According to an embodiment, the flash 218 may include, for example, a light-emitting diode or a xenon lamp.

According to various embodiments, the first camera module 205 among the camera modules 205 and 216 and/or some sensor module 204 among the sensor modules 204 and 217 may be disposed in the inner space of the electronic device 200 so as to contact external environments through an opening perforated in the flexible display 230, or through a transmissive region. According to an embodiment, the region facing the first camera module 205 of the flexible display 230 may be formed as a transmissive region having a designated transmittance as a part of the content display region. According to an embodiment, the transmissive region may be formed to have a transmittance in the range of about 5% to about 20%. Such a transmissive region may include a region overlapping the effective region (for example, field-of-view region) of the first camera module 205, through which light passes so as to be detected by an image sensor, thereby generating images.

For example, the transmissive region of the flexible display 2230 may include a region having a lower pixel density and/or wiring density than the periphery. For example, the transmissive region may replace the above-mentioned opening. For example, some camera module 205 may include an under display camera (UDC). In some embodiments, some sensor module 204 may be disposed in the inner space of the electronic device 200 so as to perform designated functions without being visually exposed through the flexible display 230. According to an embodiment, the second camera module 216 among the camera modules 205 and 216 and/or some sensor module 217 among the sensor modules 204 and 217 may be disposed in the inner space of the electronic device 200 so as to correspond to external environments through at least a part (for example, the first rear cover 213) of the first housing 210. In such a case, the second camera module 216 and/or some sensor module 217 may be disposed at a designated location on the first housing 210 so as to be always visible from the outside regardless of the closed state and/or open state.

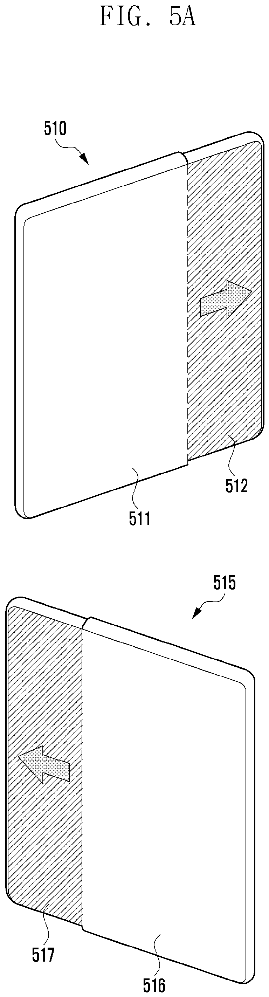

According to various embodiments, the electronic device 101 or 200 may include a display having the structure in FIG. 2A to FIG. 2D. According to various embodiments, the electronic device 101 may include various form factors such that the display can be expanded variously, in addition to the form factor described with reference to FIG. 2A to FIG. 2D. For example, the electronic device 101 may be implemented according to various form factors, based on a sliding (or rolling) scheme according to the form factor structure of the electronic device 101 or 200 in FIG. 2A to FIG. 2D. An example thereof is illustrated in following drawings (for example, FIG. 5A to FIG. 5G).

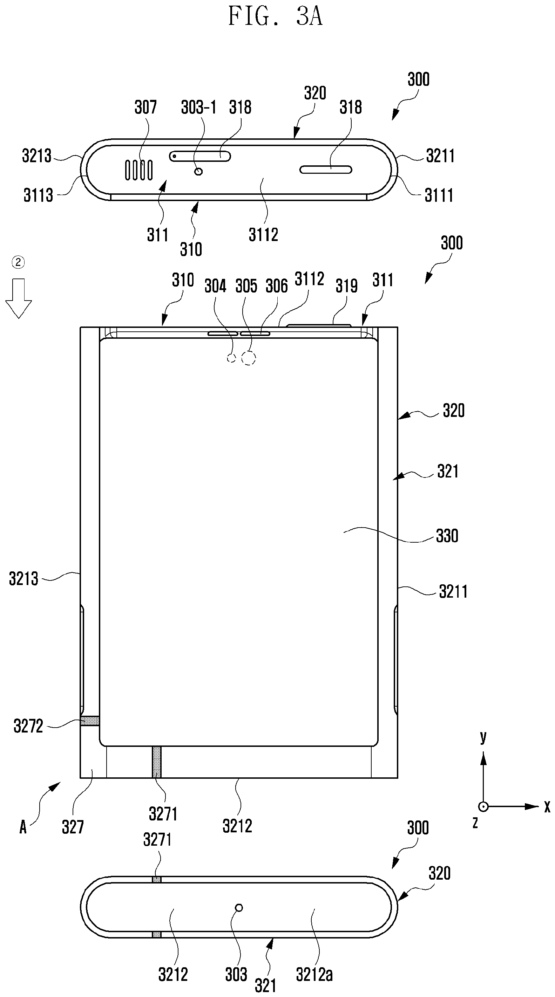

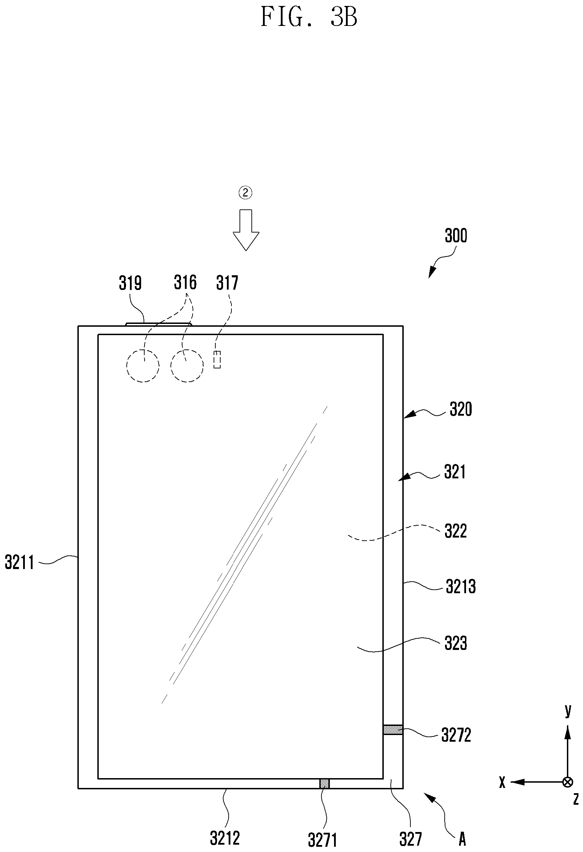

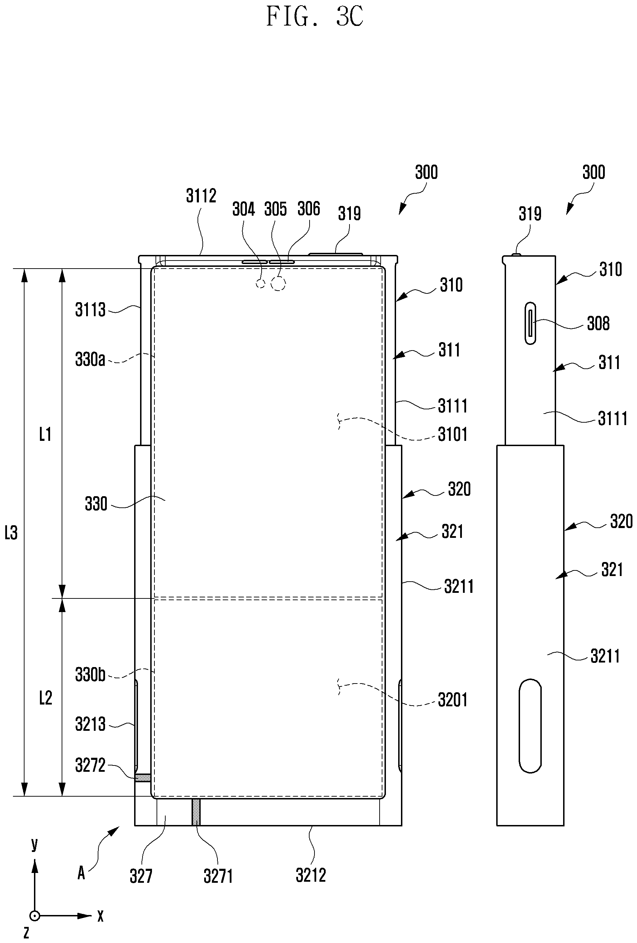

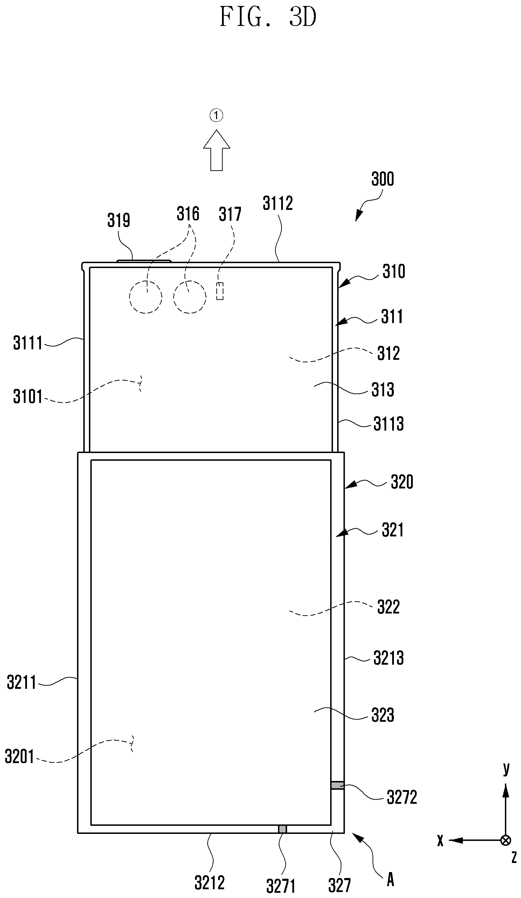

FIG. 3A and FIG. 3B illustrate the front and rear surfaces of an electronic device having a form factor according to an embodiment, which is in a closed state. FIG. 3C and FIG. 3D illustrate the front and rear surfaces of an electronic device having a form factor according to an embodiment, which is in an open state.

The electronic device 300 in FIG. 3A to FIG. 3D may be at least partially similar to the electronic device 101 in FIG. 1, may include the electronic device 101 in FIG. 1, or may further include other embodiments of the electronic device 101 in FIG. 1.

Referring to FIG. 3A to FIG. 3D, the electronic device 300 may include a first housing 310 (for example, a first housing structure, a movable portion, or a sliding housing), a second housing 320 (for example, a second housing structure, a fixed portion, or a base housing) coupled to the first housing 310 to be able to move (for example, slide) in a designated direction (direction ① or direction ②) (for example, y-axis direction), and a flexible display 330 (for example, an expandable display or a stretchable display) disposed so as to be supported through at least a part of the first housing 310 and the second housing 320.

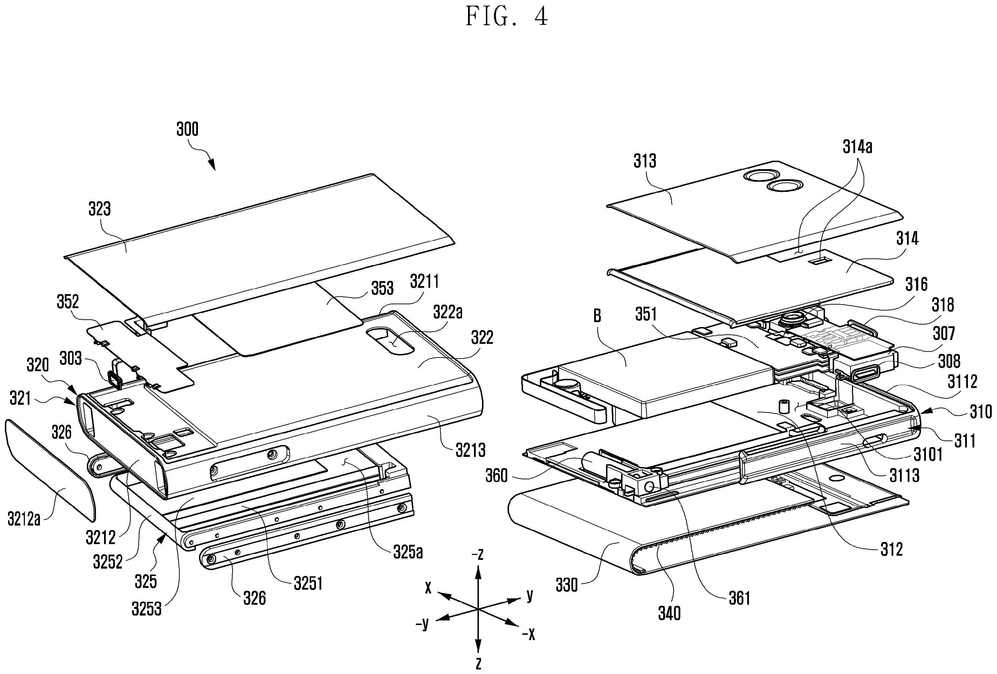

According to an embodiment, the electronic device 300 may be disposed such that, with reference to the second housing 320 held by the user, the first housing 310 slides out in a first direction (direction ①) or slides in in a second direction ②) opposite to the first direction (direction ①). According to an embodiment, at least a part of the first housing 310 including a first space 3101 may be contained in a second space 3201 of the second housing 320, thereby changing to a closed state (or slide-in state). According to an embodiment, the electronic device 300 may include a bendable member or a bendable support member (for example, the bendable member 340 in FIG. 4) (for example, a multi-joint hinge module or a multi-bar assembly) which at least partially forms the same plane with at least a part of the first housing 310 in an open state (or in a slide-out state), and which is at least partially contained in the second space 3201 of the second housing 320 in a closed state.

According to an embodiment, at least a part of the flexible display 330 may be disposed so as to be contained in the inner space 3201 of the second housing 320 while being supported by the bendable member (for example, the bendable member 340 in FIG. 4) in the closed state such that the same is invisible from the outside. According to an embodiment, at least a part of the flexible display 330 may be disposed so as to be visible from the outside while being supported by the bendable member (for example, the bendable member 340 in FIG. 4) which at least partially forms the same plane with the first housing 310 in the open state.

According to various embodiments, the electronic device 300 may include a first housing 310 including a first side member 311 and a second housing 320 including a second side member 321. According to an embodiment, the first side member 311 may include a first side surfacer 3111 having a first length along a first direction (for example, the y-axis direction), a second side surface 3112 extending from the first side surface 3111 so as to have a second length smaller than the first length along a substantially perpendicular direction (for example, the x-axis direction), and a third side surface 3113 extending from the second side surface 3112 substantially in parallel to the first side surface 3111 so as to have the first length. According to an embodiment, the first side member 311 may be at least partially made of a conductive material (for example, a metal).

In some embodiments, the first side member 311 may be made of a combination of a conductive material and a nonconductive material (for example, polymer). According to an embodiment, the first housing 310 may include a first support member 312 extending from at least a part of the first side member 311 to at least a part of the first space 3101. According to an embodiment, the first support member 312 may be formed integrally with the first side member 311. In some embodiments, the first support member 312 may be configured separately from the first side member 311 and may be structurally coupled to the first side member 311.

According to various embodiments, the second side member 321 may include a fourth side surface 3211 at least partially corresponding to the first side surface 3111 and having a third length, a fifth side surface 3212 extending from the fourth side surface 3211 substantially in parallel to the second side surface 3112 and having a fourth length smaller than the third length, and a sixth side surface 3213 extending from the fifth side surface 3212 so as to correspond to the third side surface 3112, and having the third length. According to an embodiment, the second side member 321 may be at least partially made of a conductive material (for example, metal). In some embodiments, the second side member 321 may be made of a combination of a conductive material and a nonconductive material (for example, polymer). According to an embodiment, at least a part of the second side member 321 may include a second support member 322 extending to at least a part of the second space 3201 of the second housing 320. According to an embodiment, the second support member 322 may be formed integrally with the second side member 321. In some embodiments, the second support member 322 may be configured separately from the second side member 321 and may be structurally coupled to the second side member 321.

According to various embodiments, the first side surface 3111 and the fourth side surface 3211 may be coupled to be able to slide with regard to each other. According to an embodiment, the third side surface 3113 and the sixth side surface 3213 may be coupled to be able to slide with regard to each other. According to an embodiment, the first side surface 3111 may be disposed so as to overlap the fourth side surface 3211 in the closed state such that the same is substantially invisible from the outside. According to an embodiment, the third side surface 3113 may be disposed so as to overlap the sixth side surface 3213 in the closed state such that the same is substantially invisible from the outside.

In some embodiments, at least a part of the first side surface 3111 and the third side surface 3113 may be disposed so as to be at least partially visible from the outside in the closed state. According to an embodiment, the first support member 312 may be disposed so as to overlap the second support member 322 in the closed state such that the same is substantially invisible from the outside. In some embodiments, a part of the first support member 312 may be disposed so as to overlap the second support member 322 in the closed state such that the same is invisible from the outside, and a remaining part of the first support member 312 may be disposed so as to be visible from the outside.

According to various embodiments, the electronic device 300 may include a first rear cover 313 couped to the first housing 310 on the rear surface thereof. According to an embodiment, the first rear cover 313 may be disposed through at least a part of the first support member 313. In some embodiments, the first rear cover 313 may be formed integrally with the first side member 311. According to an embodiment, the first rear cover 313 may be made of polymer, coated or colored glass, ceramic, metal (for example, aluminum (Al), stainless steel (STS), or magnesium), or a combination of at least two of the above materials. In some embodiments, the first rear cover 313 may extend to at least a part of the first side member 311. In some embodiments, at least a part of the first support member 312 may be replaced with the first rear cover 313.

According to various embodiments, the electronic device 300 may include a second rear cover 323 couped to the second housing 320 on the rear surface thereof. According to an embodiment, the second rear cover 323 may be disposed through at least a part of the second support member 323. In some embodiments, the second rear cover 323 may be formed integrally with the second side member 321. According to an embodiment, the second rear cover 323 may be made of polymer, coated or colored glass, ceramic, metal (for example, aluminum (Al), stainless steel (STS), or magnesium), or a combination of at least two of the above materials. In some embodiments, the second rear cover 323 may extend to at least a part of the second side member 321. In some embodiments, at least a part of the second support member 322 may be replaced with the second rear cover 323.

According to various embodiments, the electronic device 300 may include a flexible display 330 disposed so as to be supported by at least a part of the first housing 310 and the second housing 320. According to an embodiment, the flexible display 330 may include a first region 330a (for example, a planar portion) which is always visible from the outside, and a second region 330b (for example, a bendable portion) which extends from the first region 330a, and which is at least partially contained in the second space 3201 of the second housing 320 such that at least a part thereof is invisible from the outside in the closed state. According to an embodiment, the first region 330a may be disposed so as to be supported by the first housing 310, and the second region 330b may be disposed so as to be at least partially supported by the bendable member (for example, the bendable member 340 in FIG. 4). According to an embodiment, the second region 330b of the flexible display 330 may be disposed such that, when the first housing 310 is moved out along a designated first direction (direction ①), the same extends from the first region 330a while being supported by the bendable member (for example, the bendable member 340 in FIG. 4), forms substantially the same plane with the first region 330a, and is visible from the outside. According to an embodiment, the second region 330b of the flexible display 330 may be disposed such that, when the second housing 320 is moved in along a designated second direction (direction ②), the same is contained in the second space 3201 of the second housing 320 and is invisible from the outside. Therefore, the electronic device 300 may induce the display area of the flexible display 330 so as to vary as the first housing 310 moves from the second housing 320 along a designated direction (for example, the y-axis direction) in a sliding type.

According to various embodiments, the length of the flexible display 330 in the first direction (direction ①) may vary according to a sliding movement of the first housing 310 which is moved with reference to the second housing 320. For example, the flexible display 330 may have a first display area (for example, a region corresponding to the first region 33a) corresponding to a first length L1 in the closed state. According to an embodiment, the flexible display 330 may be expanded so as to have a third display area (for example, a region including the first region 330a and the second region 330b) which corresponds to a third length L3 larger than the first length L1, and which is larger than the first display area, according to a sliding movement of the first housing 310 which is additionally moved by a second length L2 with reference to the second housing 320 in the open state.

According to various embodiments, the electronic device 300 may include at least one of an input device (for example, a microphone 303-1) disposed in the first space 3101 of the first housing 301, a sound output device (for example, a telephone speech receiver 306 or a speaker 307), sensor modules 304 and 317, a camera module (for example, a first camera module 305 or a second camera module 316), a connector port 308, a key input device 319, or an indicator (not illustrated). According to an embodiment, the electronic device 300 may include another input device (for example, a microphone 303) disposed on the second housing 320. In another embodiment, the electronic device 300 may be configured such that at least one of the above-mentioned components is omitted, or other components are additionally included. In another embodiment, at least one of the above-mentioned components may be disposed in the second space 3201 of the second housing 320.

According to various embodiments, the input device may include a microphone 303-1. In some embodiments, the input device (for example, the microphone 303-1) may include multiple microphones disposed such that the direction of sounds can be sensed. The sound output device may include, for example, a telephone speech receiver 306 and a speaker 307. According to an embodiment, the speaker 307 may correspond to the outside through at least one speaker hole formed on the first housing 310 at a location (for example, the second side surface 3112) always exposed to the outside regardless of the closed/open (or slide-in/slide-out) state. According to an embodiment, the connector port 308 may correspond to the outside through a connector port hole formed on the first housing 310 in the open state. In some embodiments, the connector port 308 may correspond to the outside through an opening formed on the second housing 320 so as to correspond to the connector port hole in the closed state. In some embodiments, the telephone speech receiver 306 may include a speaker (for example a piezoelectric speaker) which operates while any separate speaker hole is excluded.

According to various embodiments, the sensor modules 304 and 317 may generate electric signals or data values corresponding to internal operating states of the electronic device 300, or external environment states. The sensor modules 304 and 317 may include, for example, a first sensor module 304 (for example, a proximity sensor or an illuminance sensor) disposed on the front surface of the electronic device 300 and/or a second sensor module 317 (for example, a heart rate monitoring (HRM) sensor) disposed on the rear surface of the electronic device 300. According to an embodiment, the first senor module 304 may be disposed on the front surface of the electronic device 300 and below the flexible display 330. According to an embodiment, the first sensor module 304 and/or the second sensor module 317 may include at least one of a proximity sensor, an illuminance sensor, a time of flight (TOF) sensor, an ultrasonic sensor, a fingerprint recognition sensor, a gesture sensor, a gyro sensor, a barometric sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 305 disposed on the front surface of the electronic device 300 and a second camera module 316 disposed on the rear surface of the electronic device 300. According to an embodiment, the electronic device 300 may include a flash (not illustrated) disposed near the second camera module 316. According to an embodiment, the camera modules 305 and 316 may include one or multiple lenses, an image sensor, and/or an image signal processor. According to an embodiment, the first camera module 305 may be disposed below the flexible display module 330 and configured to capture images of subjects through a part of the active region (for example, display region) of the flexible display 330.

According to various embodiments, the first camera module 305 among the camera modules, and some sensor module 304 among the sensor modules 304 and 317 may be disposed so as to detect external environments through the flexible display 330. For example, the first camera module 305 or some sensor module 304 may be disposed in the first space 3201 of the first housing 301 so as to contact external environments through a transmissive region formed on the flexible display 330, or through an opening perforated therein. According to an embodiment, the region facing the first camera module 305 of the flexible display 330 may be formed as a transmissive region having a designated transmittance as a part of the content display region.

According to an embodiment, the transmissive region may be formed to have a transmittance in the range of about 5% to about 20%. Such a transmissive region may include a region overlapping the effective region (for example, field-of-view region) of the first camera module 305, through which light passes so as to be detected by an image sensor, thereby generating images. For example, the transmissive region of the flexible display 330 may include a region having a lower pixel arrangement density and/or wiring density than the periphery. For example, the transmissive region may replace the above-mentioned opening. For example, some camera module 305 may include an under display camera (UDC). In some embodiments, some sensor module 304 may be disposed in the inner space of the electronic device 300 so as to perform designated functions without being visually exposed through the flexible display 330.

According to various embodiments, the electronic device 300 may include at least one antenna (for example, the antenna module 197 in FIG. 1) electrically connected to a wireless communication circuit (for example, the wireless communication module 192 in FIG. 1) disposed on the second housing 310. According to an embodiment, the electronic device 300 may include a bezel antenna A disposed through the conductive second side member 321 of the second housing 310. For example, the bezel antenna A may include a conductive portion 327 which is disposed on at least a part of the fifth side surface 3212 and the sixth side surface 3213 of the second side member 321, and which is electrically segmented by at least one segmentation portion 3271 and 3272 made of a nonconductive material (for example, polymer).

According to an embodiment, the wireless communication circuit (for example, the wireless communication module 192 in FIG. 1) may be configured to transmit or receive radio signals in at least one designated frequency band (for example, about 800MHz to 6000MHz) (for example, a legacy band) through the conductive portion 327. According to an embodiment, the electronic device 300 may include a side cover 3212a disposed on the fifth side surface 3212 in order to cover at least a part of the at least one segmentation portion 3271. In some embodiments, the bezel antenna A may be disposed on at least one of the second side surface 3112, the fourth side surface 3211, the fifth side surface 3212, and the sixth side surface 3213. In some embodiments, the electronic device 300 may further include at least one antenna module (for example, 5G antenna module or antenna structure) disposed in the inner space (for example, the first space 3101 or the second space 3201) so as to transmit or receive radio signals in a frequency band in the range of about 3GHz to 100GHz through another wireless communication circuit (for example, the wireless communication module 192 in FIG. 1).

According to various embodiments, the slide-in/slide-out operation of the electronic device 300 may be performed automatically. For example, the slide-in/slide-out operation of the electronic device 300 may be performed through gearing operations of a driving motor (for example, the driving motor 360 in FIG. 4) including a pinion gear 361 disposed in the first space 3101 of the first housing 310, and a rack gear (for example, the rack gear 3251 in FIG. 4) disposed in the second space 3201 of the second housing 320 so as to mesh with the pinion gear 361. For example, the processor (for example, the processor 120 in FIG. 1) of the electronic device 300 may operate the driving motor (for example, the driving motor 360 in FIG. 4) disposed inside the electronic device 300 upon detecting a triggering operation for changing from a closed state to an open state or from an open state to a closed state. According to an embodiment, the triggering operation may include selecting (for example, touching) an object displayed on the flexible display 330, or manipulating a physical button (for example, a key button) included in the electronic device 300.

FIG. 4 is an exploded perspective view of an electronic device having a form factor according to an embodiment.

In connection with describing the electronic device 300 in FIG. 4, components substantially identical to components of the electronic device 300 in FIG. 3A to FIG. 3D are given identical reference numerals, and detailed descriptions thereof may be omitted herein.

Referring to FIG. 4, the electronic device 300 may include a first housing 310 including a first space 3101, a second housing 320 which is coupled to the first housing 310 so as to be able to move (for example, slide), and which includes a second space (for example, the second space 3201 in FIG. 3C), a bendable member 340 disposed so as to able to rotate at least partially in the second space 3201, a flexible display 330 disposed so as to be supported by at least a part of the bendable member 340 and by the first housing 310, and a driving module configured to drive the first housing 310 in a direction (for example, in the -y axis direction) in which the first housing 310 tends to move into the second housing 320 and/or in a direction (for example, in the y-axis direction) in which the first housing 310 tends to move out of the second housing 320.

According to an embodiment, the driving module may include a driving motor 360 which is disposed in the first space 3101, and which includes a pinion gear 361, and a rack gear 3251 disposed in the second space 3201 so as to mesh with the pinion gear 361. According to an embodiment, the driving module may further include a reducer module coupled to the driving motor 360 and disposed so as to reduce the rotational velocity and to increase driving power. According to an embodiment, the driving motor 360 may be disposed in the first space 3101 of the first housing 310 so as to be supported through at least a part of the first support member 312. According to an embodiment, the driving motor 360 may be fixed to an end (for example, an edge) of the first support member 312 in the slide-in direction (for example, in the -y axis direction) in the first space 3101.

According to various embodiments, the electronic device 300 may include multiple electronic components disposed in the first space 3101. According to an embodiment, the multiple electronic components may include a first substrate 351 (for example, a main board), a camera module 316 disposed on the periphery of the first substrate 351, a socket module 318 (for example, a SIM tray), a speaker 307, a connector port 308, and a battery *B*. According to an embodiment, the multiple electronic components may be disposed in the first space 3101 of the first housing 310 on the periphery of the first substrate 351, together with the driving motor 360, thereby enabling efficient electric connection.

According to various embodiments, the electronic device 300 may include a rear bracket 314 disposed between the first support member 312 and the first rear cover 313 of the first housing 310 so as to cover at least some of the multiple electronic components. According to an embodiment, the rear bracket 314 may be structurally coupled to at least a part of the first support member 312. In some embodiments, the rear bracket 314 may be omitted. According to an embodiment, the rear bracket 314 may be disposed so as to cover the multiple electronic components and to support the first rear cover 313.

According to an embodiment, the rear bracket 314 may include a notch region 314a or an opening 314a (for example, a through-hole) formed in a region corresponding to the camera module 316 and/or the sensor module (for example, the sensor module 317 in FIG. 3D). According to an embodiment, the camera module 316 and/or the sensor module 317 may be disposed so as to detect external environments through the notch region 314a or the opening 314a. According to an embodiment, the first rear cover 313 may have a transparent region at least corresponding to the camera module 316 and/or the sensor module 317. In some embodiments, the camera module 316 and/or the sensor module 317 may be configured to operate only when the electronic device 300 is in an open state.

According to various embodiments, the electronic device 300 may include a plate-type support bracket 325 (for example, a display support bar (DSB)) disposed in the second space 3201 of the second housing 320 and coupled to at least a part of the first support member 312 so as to be able to slide. According to an embodiment, the support bracket 325 may include an opening 325a having a designated size. According to an embodiment, the support bracket 325 may include a support portion 3252 disposed on one end thereof, the support portion 3252 having an outer surface formed in a curved shape so as to support the back surface of the bendable member 340, which bends during a sliding operation.

According to an embodiment, the support bracket 325 may include a support plate 3253 extending from at least a part of the support portion 3252 to at least a part of the opening 325a so as to support the back surface of the bendable member 340 in the open state. According to an embodiment, the support bracket 325 may include a rack gear 3251 which traverses the opening 325a, and which is fixed to have a length along a direction parallel to the sliding direction. In some embodiments, the rack gear 3251 may be formed integrally with the support bracket 325. According to an embodiment, the electronic device 300 may include a pair of guide rails 326 disposed on both side surfaces of the support bracket 325 so as to guide both ends of the bendable member 340 in the sliding direction.

According to various embodiments, the second housing 320 may include an opening 322a (for example, a through-hole) disposed in a region on the second support member 322, which corresponds to the camera module 316 and/or the sensor module 317 disposed on the first housing 310, when the electronic device 300 is in a closed state. According to an embodiment, the camera module 316 and/or the sensor module 317 may detect external environments through the opening 322a formed on the second housing 320 when the electronic device 300 is in a closed state. In such a case, at least the region of the second rear cover 323, which corresponds to the camera module 316 and/or the sensor module 317, may be made transparent.

According to various embodiments, the electronic device 300 may include a second substrate 352 and an antenna member 353 disposed in a space between the second support member 322 and the second rear cover 323 of the second housing 320. According to an embodiment, the second substrate 352 and the antenna member 353 may be electrically connected to the first substrate 351 through at least one electric connection member (for example, a flexible printed circuit board (FPCB) or a flexible RF cable (FRC)). In some embodiments, the antenna member 353 may be electrically connected to the second substrate 352, thereby being electrically connected to the first substrate 351 through the second substrate 352.

According to various embodiments, the electronic device 101 or 300 may include a display having the structure in FIG. 3A to FIG. 3D. According to various embodiments, the electronic device 101 may include various form factors such that the display can be expanded variously, in addition to the form factor described with reference to FIG. 3A to FIG. 3D. For example, the electronic device 101 may be implemented according to various form factors, based on a sliding (or rolling) scheme according to the form factor structure of the electronic device 101 or 300 in FIG. 3A to FIG. 3D. An example thereof is illustrated in following drawings (for example, FIG. 5A to FIG. 5G).

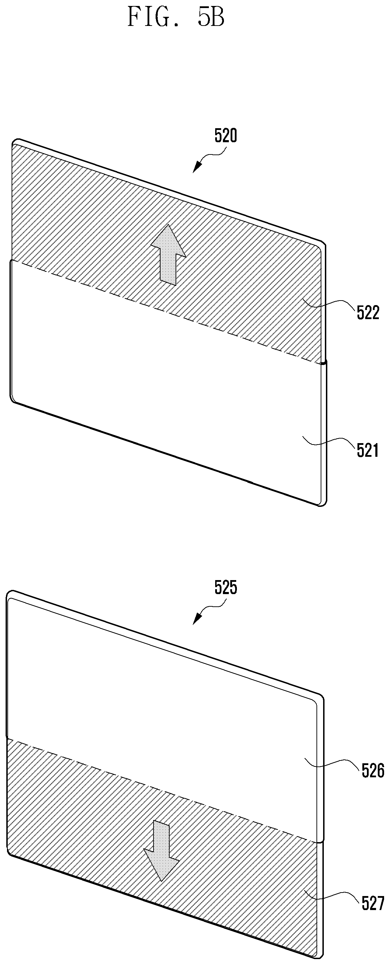

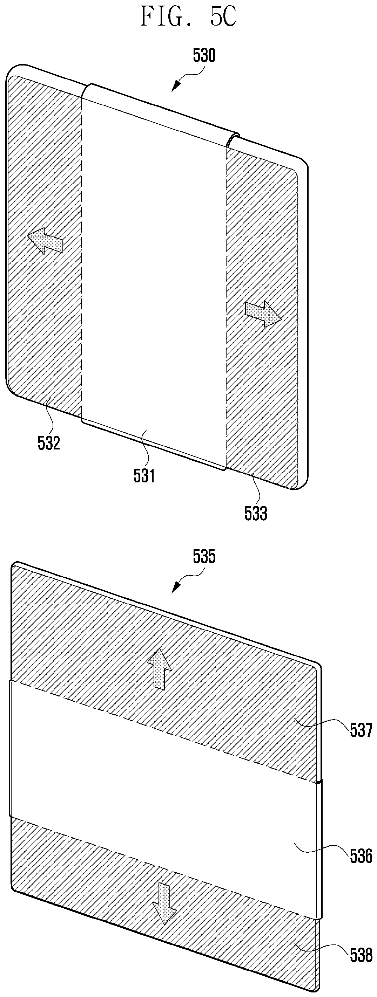

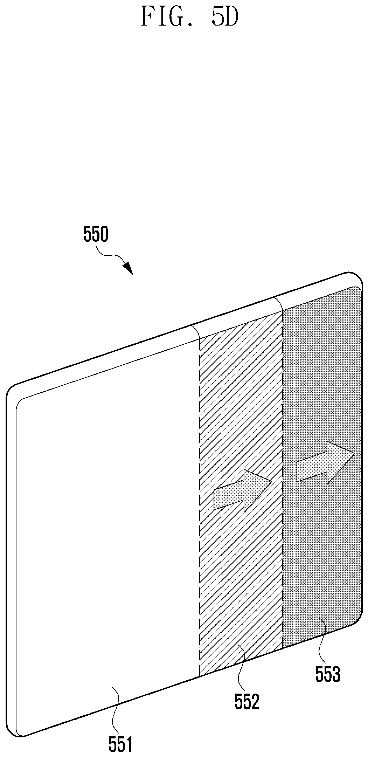

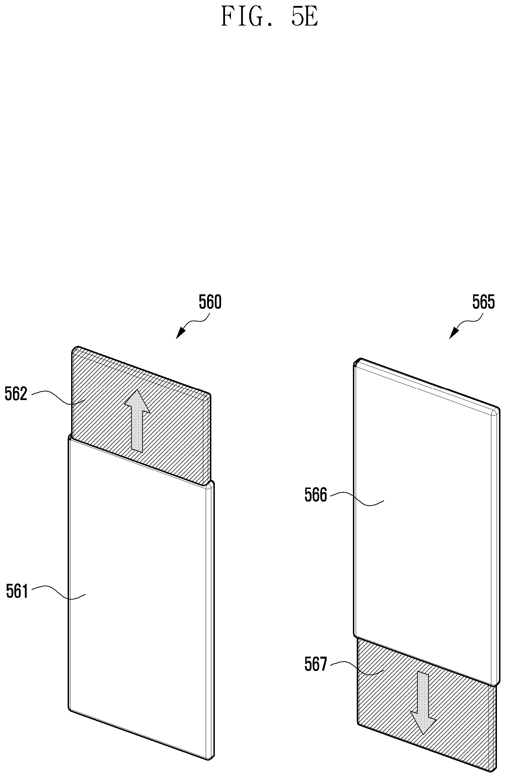

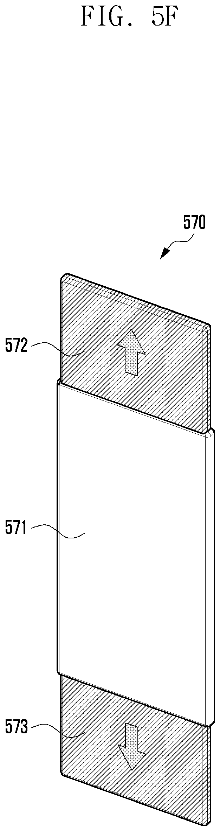

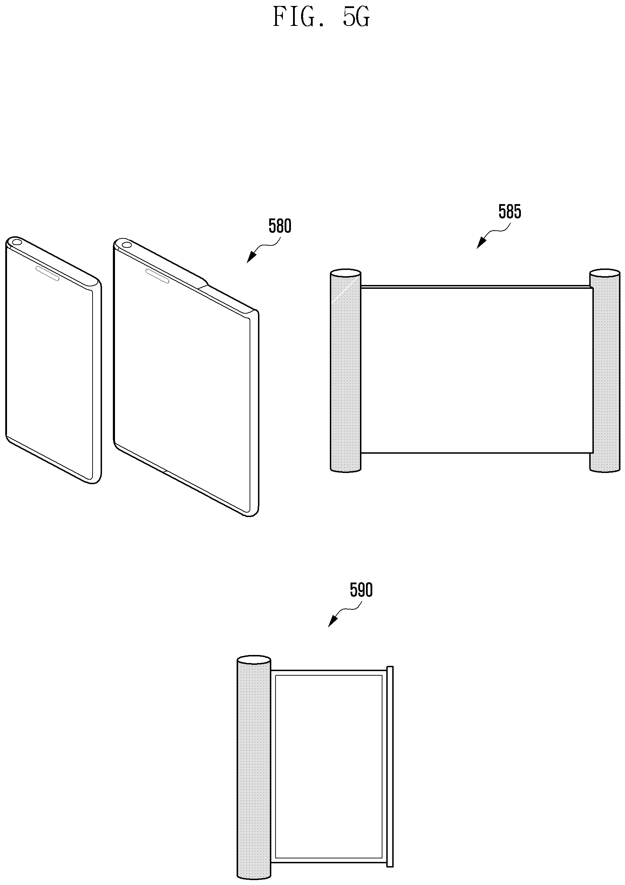

FIG. 5A, FIG. 5B, FIG. 5C, FIG. 5D, FIG. 5E, FIG. 5F, and FIG. 5G illustrate various example of the structure of an expandable display of an electronic device according to various embodiments.

Referring to FIG. 5A to FIG. 5G, the electronic device according to various embodiments (for example, the electronic device 101 in FIG. 1) may include a housing structure in which the display may be expanded in at least one of the upward, downward, leftward, and rightward directions. For example, FIG. 5A to FIG. 5G may illustrate examples of various form factors of an electronic device including a display having a variable display region according to an embodiment.

As illustrated in FIG. 5A, the electronic device may be implemented such that sliding is possible in one direction. For example, the electronic device may include a display 510 which is expandable in a first direction (for example, in the rightward direction). For example, a screen may be displayed through the first display region 511 in a first state (for example, closed state) in which the display 510 is not expanded, and the second display region 512 may be contained in the housing in a deactivated state.

According to an embodiment, the electronic device may be switched from the first state to a second state by the user's manipulation or a preconfigured input.

According to an embodiment, if the electronic device is switched from the first state to a second state (for example, open state), the second display region 512 may be moved out in the first direction 512 and exposed to the outside. In the second state in which the display 510 is expanded, the electronic device may switch the second display region 512 to an activated state and may display a screen through the first display region 511 and the second display region 512. According to another embodiment, if the second housing slides in one direction (for example, first direction) with regard to the first housing when the electronic device switches from the first state to the second state, at least a part (for example, corresponding to a part of the left region of the first display region 511 as illustrated in the drawing) of the display 510 contained in the first housing may be moved out, thereby expanding the display region of the display 510.

If the second housing slides in a second direction with regard to the first housing when the electronic device switches from the second state to the first state, a part (for example, corresponding to a part of the left region of the first display region 511 as illustrated in the drawing) of the display 510 may move into the first housing, thereby reducing the display region of the display 510. According to an embodiment, in the case of the electronic device, the display region (for example, the first display region 511) of the display 510 may have a ratio of 4:3, for example, in the first state (for example, closed state), and the display region (for example, the first display region 511 and the second display region 512) of the display 510 may be expanded to a ratio of 21:9, for example, in the second state (for example, open state).

According to another embodiment, the electronic device may include a first display region 516 configured to display a screen in the first state (for example, closed state) in which the display 515 is not expanded, and a second display region 517 expandable in the second direction (for example, leftward direction), and configured to display a screen in the second state (for example, open state) in which the display 515 is expanded.

As illustrated in FIG. 5B, the electronic device may include a display expandable in a third direction (for example, upward direction) or in a fifth direction (for example, downward direction).

According to an embodiment, the electronic device may include a first display region 521 configured to display a screen in a first state in which the display 520 is not expanded, and a second display region 522 expandable in the third direction, and configured to display a screen in the expanded second state. According to another embodiment, the electronic device may include a first display region 526 configured to display a screen in a first state in which the display 520 is not expanded, and a second display region 527 expandable in a fourth direction, and configured to display a screen in the expanded second state.

As illustrated in FIG. 5C, the electronic device may include a display expandable in both leftward and rightward directions, or in both upward and downward directions.

According to an embodiment, the electronic device may include a first display region 531 configured to display a screen in a first state in which the display 530 is not expanded, a second display region 532 expandable in a first direction and configured to display a screen in the expanded second state, and a third display region 533 expandable in a second direction and configured to display a screen in the expanded second state. In such a case, at least one of the second display region 532 and the third display region 533 may be expanded according to the user's manipulation, a preconfigured input, or the type of content that is output.

According to an embodiment, an electronic device having the housing structure illustrated in FIG. 5C may be implemented such that sliding is possible in two directions. For example, in the first state (for example, closed state) of the electronic device, the display region (for example, the first display region 531) of the display 530 may have a ratio of 21 :9, for example, and the display region (for example, the first display region 531, the second display region 532, and the third display region 533) of the display 530 may be expanded to a ratio of 4:3, for example, in the second state (for example, open state).

If the second housing and the third housing slide in two directions, for example, in the first direction (for example, leftward direction) and in the second direction (for example, rightward direction), respectively, with regard to the first housing when the electronic device switches from the first state to the second state, a part (for example, the second display region 532) of the display 532 contained in the first housing may move out in the first direction, and another part (for example, the third display region 533) thereof may move out in the second direction, thereby expanding the display region of the display 530. Although not illustrated in the drawings, only a part of the display 530 of the electronic device may be expanded (for example, the first display region 531 and the second display region 532) in the first direction, or only another part thereof may be expanded in the second direction (for example, the first display region 531 and the third display region 533).

According to an embodiment, the electronic device may include a first display region 536 configured to display a screen in a first state in which the display 535 is not expanded, a second display region 537 expandable in the third direction and configured to display a screen in an expanded second state, and a third display region 538 expandable in the fourth direction and configured to display a screen in the expanded second state.

According to various embodiments, the electronic device may include a display expandable both in the upward direction (or downward direction) and in the rightward direction (or leftward direction).

As illustrated in FIG. 5D, the electronic device may include a display capable of stepwise expansion, and only a part of the display may be expanded.

According to an embodiment, the electronic device may include a first display region 551 configured to display a screen in a first state in which the display 550 is not expanded, a second display region 552 expandable in a first direction (for example, rightward direction) in an expanded second state and configured to display a screen, and a third display region 553 additionally expandable in the first direction (for example, rightward direction) and configured to display a screen in an additionally expanded third state.

According to an embodiment, the electronic device may activate only the second display region 552 of the display 550 and then display a screen. According to an embodiment, the electronic device may activate both the second display region 552 and the third display region 553 of the display 550 and then display a screen. For example, the display 550 may be retained through a support structure when expanded to the second display region 552, and may be expanded by an additional force from the second display region 552 to the third display region 553.

As illustrated in FIG. 5E, the electronic device may include a display expanded in a third direction (for example, upward direction) or in a fourth direction (for example, downward direction). According to an embodiment, the electronic device illustrated in FIG. 5E may include a bar-type form factor in a closed state.

According to an embodiment, the electronic device may include a first display region 561 configured to display a screen in a first state in which the display 560 is not expanded, and a second display region 562 expandable in the third direction and configured to display a screen in an expanded second state. According to an embodiment, the electronic device may include a first display region 566 configured to display a screen in a first state in which the display 565 is not expanded, and a second display region 567 expandable in the fourth direction and configured to display a screen in an expanded second state.

As illustrated in FIG. 5F, the electronic device may include a display expandable in both upward and downward directions. According to an embodiment, the electronic device illustrated in FIG. 5F may include a bar-type form factor in a closed state.

According to an embodiment, the electronic device may include a first display region 571 configured to display a screen in a first state in which the display 570 is not expanded, a second display region 572 expandable in a third direction and configured to display a screen in an expanded second state, and a third display region 573 expandable in a fourth direction and configured to display a screen in the expanded second state. In this a case, at least one of the second display region 532 and the third display region 533 may be expanded according to the user's manipulation, a preconfigured input, or the type of content that is output.

The electronic device 101 in various embodiments described later may include a display having the structure in at least one of FIG. 2A to FIG. 5F. According to various embodiments, in addition to the form factor described with reference to FIG. 2A to FIG. 5F, various form factors which enable various types of expansion of the display may be included.

According to various embodiments, the electronic device 101 may be implemented in various form factors according to various types of sliding of the display, in addition to the form factor of the electronic device in FIG. 5A to FIG. 5F. An example thereof is illustrated in FIG. 5G.

For example, as illustrated in FIG. 5G, the electronic device may include various form factors such as rollable (or slidable) devices 580, 585, and 590 capable of expanding the area of the display in a rolling type and/or sliding type. According to an embodiment, as illustrated in FIG. 5G, the electronic device may be implemented in various types, and the display may be provided in various types according to the manner in which the electronic device is implemented.

According to an embodiment, the electronic device (for example, 580, 585, or 590) may include a roll-up-type display (for example, rollable display) in the housing. According to an embodiment, the electronic device may refer to an electronic device, the display of which is capable of bending deformation such that at least a part thereof can be wound (or rolled) or contained in the housing (not illustrated). As needed by the user, the electronic device may unfold the display, or expose a larger area of the display to the outside, such that the screen display region can be expanded and used. For example, the externally exposed area of the display of the electronic device 101 may vary according to the degree to which the user unfolds the display.

According to an embodiment, the electronic device 101 may include a housing structure for protecting a display wound in a circular shape, and may operate in a structure in which the display is opened (for example, expanded) in the housing. For example, as illustrated in FIG. 5G, at least a part of the display may be contained in a cylindrical housing or flat plate-type housing.

According to various embodiments, the electronic device 101 may be manually switched by the user, in connection with a change in the state of the display (for example, open state, intermediate state, or closed state), or may be automatically switched through a driving mechanism (for example, a driving motor, a reducer gear module, and/or a gear assembly) disposed in the housing. According to an embodiment, operations of the driving mechanism may be triggered based on a user input. According to an embodiment, the user input for triggering operations of the driving mechanism may include a touch input, a force touch input, and/or a gesture input through the display module 160.

For example, if a signal is generated from various sensors such as a pressure sensor, the electronic device 101 may switch from a closed state to an open state, or form an open state to a closed state. For example, when the electronic device 100 is carried or held by hand, a sensor may sense a part of the hand (for example, palm or finger) applying pressure within a designated section of the electronic device 101 (squeeze gesture), and the electronic device 101 may be switched, in response thereto, from a closed state to an open state, or vice versa. In another embodiment, the user input for triggering operations of the driving mechanism may include a sound input (or voice input), or an input to a physical button visually exposed out of the housing.

As in above-described examples, according to various embodiments, the electronic device 101 may be implemented such that the display area of the display can be changed in various rolling (or sliding) types.

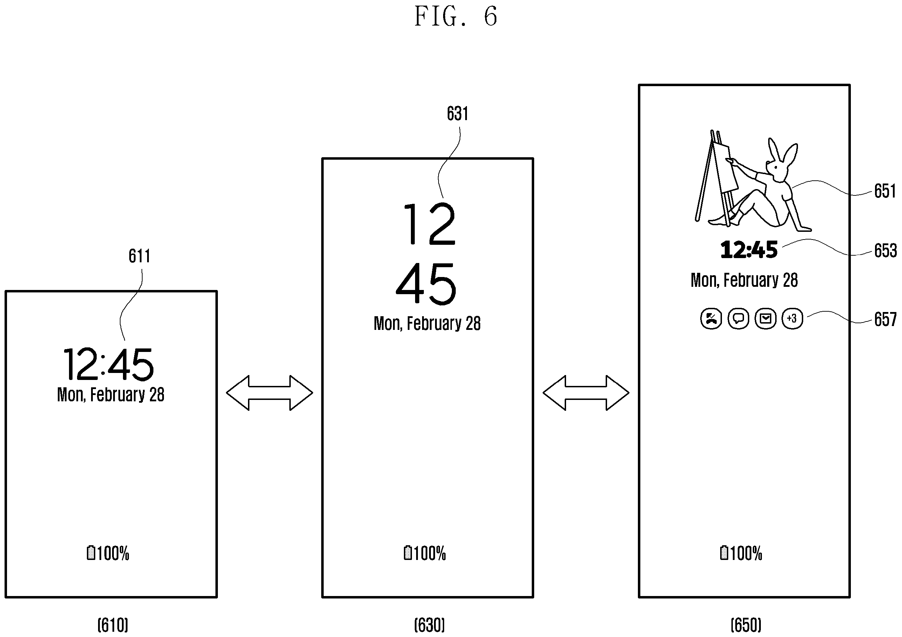

FIG. 6 illustrates an example in which a background screen is displayed according to a change in the state of an electronic device according to various embodiments.

Referring to FIG. 6, the electronic device according to various embodiments (for example, the electronic device 101 in FIG. 1, the electronic device 200 in FIG. 2A to FIG. 2D, or the electronic device 300 in FIG. 3A to FIG. 3D) may display the background screen differently according to a change in the state of the electronic device 101. The electronic device 101 may include a display expandable in the horizontal direction (for example, the flexible display 230 in FIG. 2A to FIG. 2D), or a display expandable in the vertical direction (for example, the flexible display 330 in FIG. 3A to FIG. 3D).

The electronic device 101 may include a first housing (for example, the first housing 310 in FIG. 3A to FIG. 3D), and a second housing (for example, the second housing 320 in FIG. 3A to FIG. 3D) coupled to the first housing 310 so as to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The electronic device 101 may include a first housing (for example, the first housing 310 in FIG. 3A to FIG. 3D), and a second housing (for example, the second housing 320 in FIG. 3A to FIG. 3D) coupled to the first housing 310 so as to be able to move (for example, slide) in a designated direction (for example, in the y-axis direction). A change in the state of the electronic device 101 may refer to a change from the closed state to the open state or from the open state to the closed state. In addition, a change in the state of the electronic device 101 may include a state in which the same undergoes a state change, for example, a state (for example, intermediate state) in which the same undergoes a change from the closed state to the open state, or a state in which the same undergoes a change from the open state to the closed state.

For example, in the closed state of the electronic device 101, the electronic device 101 may provide a first user interface 610. The first user interface 610 may display a clock-type background screen, and first time information 611 may all be displayed in one row. The first time information 611 may include hours (for example, 12 o' clock) and minutes (for example, 45 minutes). The electronic device 101 may display the first time information 611 on the flexible display 330.

While the electronic device 101 undergoes a state change (for example, a change from the closed state to the open state, or vice versa), the electronic device 101 may provide a second user interface 630. The second user interface 630 may be another user interface for displaying a clock-type background screen, and second time information 631 may be divided and displayed in two rows. The second user interface 630 may corresponds to an intermediate switching screen provided in an intermediate state (or intermediate expanded state), or a screen set by the user in the intermediate state. For example, the second time information 631 may have a larger font size than the first time information 610, may include hours (for example, 12 o' clock) in the first row, and may include minutes (for example, 45 minutes) in the second row. The second user interface 630 may display the same clock-type background screen as the first user interface 610 but in a different manner.

In the open state of the electronic device 101, the electronic device 101 may provide a third user interface 650. The third user interface 650 may be another user interface for displaying a clock-type background screen. The third user interface 650 may include an image 651, third time information 653, or an indication 657. The image 651 may include a still image or a video, as a background image. In the case of the third time information 653, hours and minutes may both be displayed in one row. The indication 657 may include an application icon, for example, as notification information.

It may be understood that the third user interface 650 displays the same clock-type background screen as the first user interface 610 or the second user interface 63 but in a different manner. For example, the third time information 653 may all be displayed in one row as in the case of the first time information 651, but the third user interface 650 may further include an image 651 or an indication 657.

A sliding electronic device according to an embodiment of the disclosure (for example, the electronic device 101 in FIG. 1, the electronic device 200 in FIG. 2A to FIG. 2D, or the electronic device 300 in FIG. 3A to FIG. 3D) may include a flexible display (for example, the flexible display 330 in FIG. 3A to FIG. 3D), a first housing (for example, the first housing 310 in FIG. 3A to FIG. 3D) disposed in a first region of the flexible display, a second housing (for example, the second housing 320 in FIG. 3A to FIG. 3D) configured to be able to slide with regard to the first housing and to support a second region of the flexible display, a memory (for example, the memory 130 in FIG. 1), and a processor (for example, the processor 120 in FIG. 1) operatively connected to at least one of the flexible display or the memory. The processor may determine a state of the sliding electronic device in response to an event for background screen display, display a background screen, based on the state of the sliding electronic device, detect a change in the state of the sliding electronic device, and provide a switching effect to the background screen during a change in the state of the sliding electronic device, or display a different background screen in response to a change in the state of the sliding electronic device. The state of the sliding electronic device may include at least one of a closed state in which the first housing is contained in an inner space of the second housing, an open state in which the first housing is exposed out of the second housing, or an intermediate state between the closed state and the open state.

The processor may be configured to display a user interface associated with a background screen configuration on the flexible display, detect a user input through the user interface, and display a different background screen in response to the state of the sliding electronic device, based on the user input.

The processor may be configured to provide a user interface for configuring a watch-type background screen to be displayed on a lock screen, or a watch-type background screen to be displayed in a display power-save mode, respectively, and configure a watch-type background screen according to the state of the sliding electronic device, based on a user input through the user interface.

The processor may be configured to display a user interface associated with a background screen configuration in relation to notification viewing on the flexible display, and configure at least one of the image, size, or number of notifications corresponding to the state of the sliding electronic device, based on a user input through the user interface.

The processor may be configured to display a user interface for differently configuring an application shortcut of a lock screen according to the state of the sliding electronic device, and configure an application shortcut displayed on the lock screen in the closed state of the sliding electronic device and an application shortcut displayed on the lock screen in the open state of the sliding electronic device differently from each other, based on a user input through the user interface.

The processor may configure, based on a user input, a first background screen displayed in the closed state of the sliding electronic device, and a second background screen displayed in the intermediate state of the sliding electronic device. The first background screen and the second background screen may include an identical background image and may have an adjusted transparency.

The processor may configure a third background screen displayed in the open state of the sliding electronic device. The third background screen may include a background image different from the first background screen, and may further include notification information.

The processor may be configured to display a user interface for differently configuring ratio information of a home screen in response to the state of the sliding electronic device, and configure ratio information of the home screen in the closed state of the sliding electronic device to be different from ratio information of the home screen in the open state of the sliding electronic device, based on a user input through the user interface.

The processor may be configured to detect a change in the state of the sliding electronic device while displaying a first background screen, calculate a coordinate value according to the change in the state of the sliding electronic device, and render and display a background screen object, based on the calculated coordinate value.

The processor may be configured to change at least one of the shape, location, or animation of the background screen object, based on the calculated coordinate value, and display the background screen object.

The processor may display a second background screen in case that the change in the state of the sliding electronic device is completed. The second background screen may be configured to be different from the first background screen.

The processor may be configured to display a first background screen including a switching effect object on the flexible display, detect a change in the state of the sliding electronic device, identify the switching effect object included in the first background screen, and display a second background screen such that the identified switching effect object is displayed differently according to a change in the state of the sliding electronic device.

The processor may be configured to display a third background screen including the identified switching effect object in case that the change in the state of the sliding electronic device is stopped.

A three-dimensional character or a switching effect object included in the first background screen may be configured to be different from a three-dimensional character or a switching effect object of the second background screen in terms of the shape, location, or animation. In that way, for the three-dimensional character the effects are naturally and simultaneously are optimized based on a degree of expansion of the background screen.

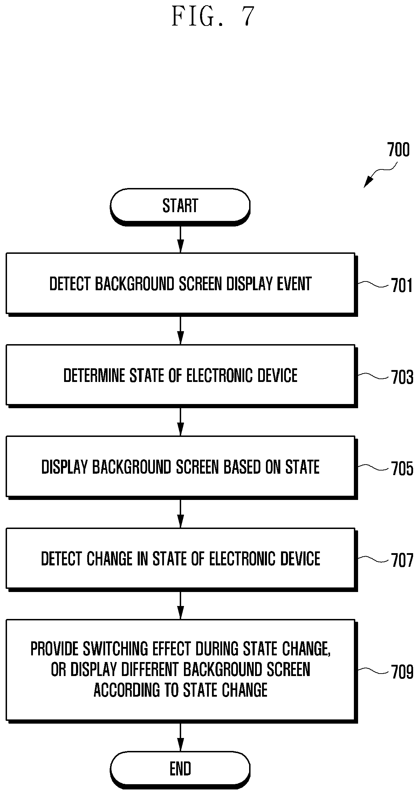

FIG. 7 is a flowchart 700 illustrating a method for operating an electronic device according to various embodiments.

It will be assumed in the embodiment described hereinafter that respective operations are performed by an electronic device (for example, the electronic device 101 in FIG. 1, the electronic device 200 in FIG. 2A to FIG. 2D, or the electronic device 300 in FIG. 3A to FIG. 3D) including a display expandable in the horizontal direction (for example, the flexible display 230 in FIG. 2A to FIG. 2D), or a display expandable in the vertical direction (for example, the flexible display 330 in FIG. 3A to FIG. 3D).

Referring to FIG. 7, in operation 701, the processor (for example, the processor 120 in FIG. 1) of an electronic device 101 according to various embodiments may detect a background screen display event. The background screen display event (or trigger) may include at least one of an operation of turning on the display (for example, the display module 160 in FIG. 1) of the electronic device 101, an operation of ending an application execution screen (for example, moving to the home screen), and/or an operation of sensing a user input designated to display a background screen. The above example is only for helping the understanding of the disclosure, and the background screen display event may include various triggers related to displaying a background screen through the display of the electronic device 101.

In operation 703, the processor 120 may determine the state of the electronic device 101. The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

In operation 705, the processor 120 may display a background screen, based on the state of the electronic device 101. For example, in the closed state of the electronic device 101, the processor 120 may display the first user interface 610 in FIG. 6 on the flexible display 330. Alternatively, in the intermediate state of the electronic device 101, the processor 120 may display the second user interface 630 in FIG. 6 on the flexible display 330. Alternatively, in the open state of the electronic device 101, the processor 120 may display the third user interface 650 in FIG. 6 on the flexible display 330.

In operation 707, the processor 120 may detect a change in the state of the electronic device 101. According to various embodiments, a change in the state of the electronic device 101 may be made through the user's manipulation or a user input. The user input may include a sound input (or voice input), or an input to a physical button visually exposed out of the housing. For example, the electronic device 200 may be switched from a closed state to an open state through an operation of the flexible display 330 pushed in a designated first direction (direction ①) through the user's manipulation. According to an embodiment, the electronic device 200 may be switched from an open state to a closed state through an operation of the flexible display 330 pushed in a designated second direction (direction ②) through the user's manipulation. According to an embodiment, the electronic device 200 may maintain an open state and/or a closed state as the first housing 310 is pressurized by a sliding hinge module (not illustrated) disposed between the first housing 310 and the second housing 320 in a direction in which the first housing 310 tends to move inward from the second housing 320 with reference to a designated inflection point, or in a direction in which the first housing 310 tends to move outward therefrom.

In some embodiments, the electronic device 101 may be configured such that the first housing 210 is moved outward in a first direction (direction ①) through manipulation of a locker exposed through the rear surface 200b of the electronic device 200. In some embodiments, the electronic device 101 may operate automatically through a driving mechanism (for example, a driving motor, a reducer module, and/or a gear assembly) disposed in the inner space of the first housing 210 and/or in the inner space of the second housing 220.

In operation 709, the processor 120 may provide a switching effect during a change in the state of the electronic device 101, or may display a different background screen according to the state change. The switching effect may correspond to providing a morphing effect on the background screen such that a change in the state of the electronic device 101 proceeds naturally. For example, the switching effect may include at least one of morphing, transparency, pushing, masking, or dissipation. In addition, the switching effect may be provided differently for each background screen. The processor 120 may configure a background screen according to a state change, based on each screen value configured according to the state of the electronic device 101. The screen value may be configured differently according to the state of the electronic device 101. For example, a switching effect applied to a watch-type background screen or background image may include at least one of transparency, pushing, masking, or dissipation. A switching effect applied to the home screen may include changing the location of an application shortcut or stretching a widget. A switching effect applied to a notification view setup or an application shortcut on the lock screen may include at least one of transparency, pushing, or masking.

According to various embodiments, the processor 120 may prearrange a template such that a switching effect is applied to the background screen according to a change in the state of the electronic device 101, and may provide a switching effect based on the template. Alternatively, the processor 120 may prearrange different background screens according to a change in the state of the electronic device 101, and may provide the arranged background screens differently according to the state of the electronic device 101.

According to various embodiments, the processor 120 may display different background screens during a change in the state of the electronic device 101. For example, a first background screen displayed in the closed state, a second background screen displayed in the intermediate state, and a third background screen displayed in the open state may be entirely different images (or texts or videos) or characters.

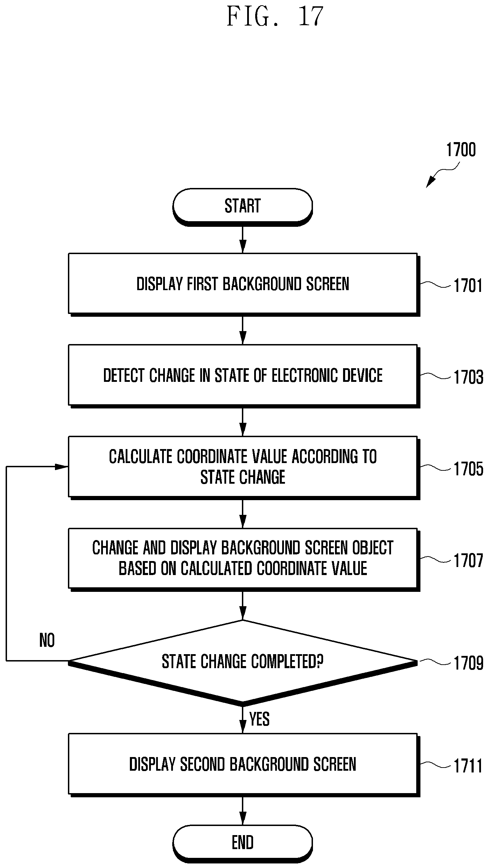

According to various embodiments, if the background screen includes a three-dimensional character, the processor 120 may apply a change in facial expression (for example, surprise, delight, excitement, happiness, horror, pain, or the like) to the three-dimensional character as a switching effect. Alternatively, the processor 120 may apply a switching effect (for example, a vibration-like movement (for example, earthquake), motion blur, speediness, particles) to the background screen of the three-dimensional character. Such an embodiment will be described in more detail with reference to FIG. 17. In that way, for the three-dimensional character the effects are naturally and simultaneously are optimized based on a degree of expansion of the background screen.

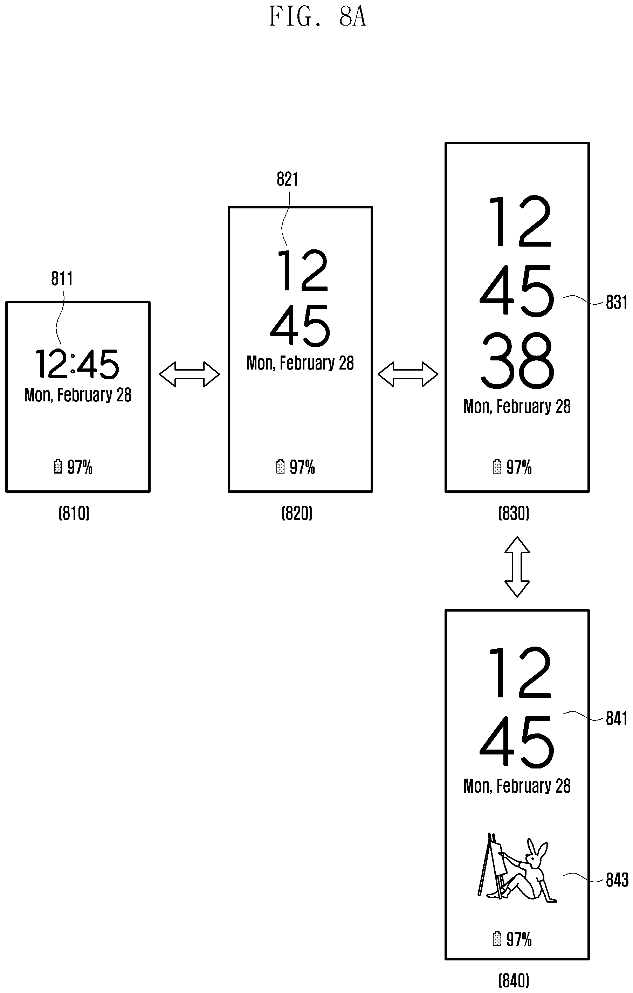

FIG. 8A illustrates an example of displaying a watch-type background screen according to a change in the state of an electronic device according to various embodiments.

Referring to FIG. 8A, the electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the horizontal direction (for example, the flexible display 230 in FIG. 2A to FIG. 2D), or a display expandable in the vertical direction (for example, the flexible display 330 in FIG. 3A to FIG. 3D). For example, the electronic device 101 may include a first housing (for example, the first housing 310 in FIG. 3A to FIG. 3D), and a second housing (for example, the second housing 320 in FIG. 3A to FIG. 3D) coupled to the first housing 310 so as to be able to move (for example, slide) in a designated direction (for example, in the y-axis direction).

The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state. In the closed state of the electronic device 101, the processor (for example, the processor 120 in FIG. 1) of the electronic device 101 may provide a first user interface 810 on the flexible display 330. The first user interface 810 may display a clock-type background screen, and first time information 811 may all be displayed in one row. The first time information 811 may include hours (for example, 12 o' clock) and minutes (for example, 45 minutes).

While the electronic device 101 undergoes a state change (for example, a change from the closed state to the open state, or vice versa), the electronic device 101 may provide a second user interface 820. The second user interface 820 may be another user interface for displaying a clock-type background screen, and second time information 821 may be divided and displayed in two rows. For example, the second time information 821 may have a larger font size than the first time information 811, may include hours (for example, 12 o' clock) in the first row, and may include minutes (for example, 45 minutes) in the second row. It may be understood that the second user interface 820 may display the same clock-type background screen as the first user interface 810 but in a different manner.

The electronic device 101 may configure a background screen according to a state change, based on each screen value configured according to the state of the electronic device 101. For example, the electronic device 101 may configure the screen of the second user interface 820 such that the font style, size arrangement, or color of the clock of the first user interface 810 and the font style, size arrangement, or color of the clock of the second user interface 820 become continuous naturally.

In the open state of the electronic device 101, the electronic device 101 may provide a third user interface 830 or a fourth user interface 840. The third user interface 830 and the fourth user interface 840 may be other user interfaces for displaying a clock-type background screen. The third user interface 830 may include third time information 831. The third time information 831 may have a larger font size than the second time information 821, may include hours (for example, 12 o' clock) in the first row, may include minutes (for example, 45 minutes) in the second row, and may include the second (for example, 38 seconds) in the third row. It may be understood that the third user interface 830 may display the same clock-type background screen as the first user interface 810 or the second user interface 820 but in a different manner. In addition, the fourth user interface 840 may include fourth time information 841 and an image 843. The fourth time information 841 may have a larger font size than the second time information 821, may include hours (for example, 12 o' clock) in the first row, and may include minutes (for example, 45 minutes) in the second row. The image 843 may include a still image or a video. It may be understood that the fourth time information 841 does not display the second, unlike the third time information 831, and the fourth user interface 840 further includes an image 843.

According to various embodiments, the electronic device 101 may display the second user interface 82 during a change in the state of the electronic device 101, may display the third user interface 830 if the change in the state of the electronic device 101 continues, and may provide the fourth user interface 840 if the change in the state of the electronic device 101 is completed, thereby resulting in an open state of the electronic device 101. For example, the electronic device 101 may configure the screen of the third user interface 830 such that the font style, size arrangement, or color of the clock of the second user interface 820 and the font style, size arrangement, or color of the clock of the third user interface 830 become continuous naturally. In that way, the usability of the device is optimized based on a degree of expansion of the background screen.

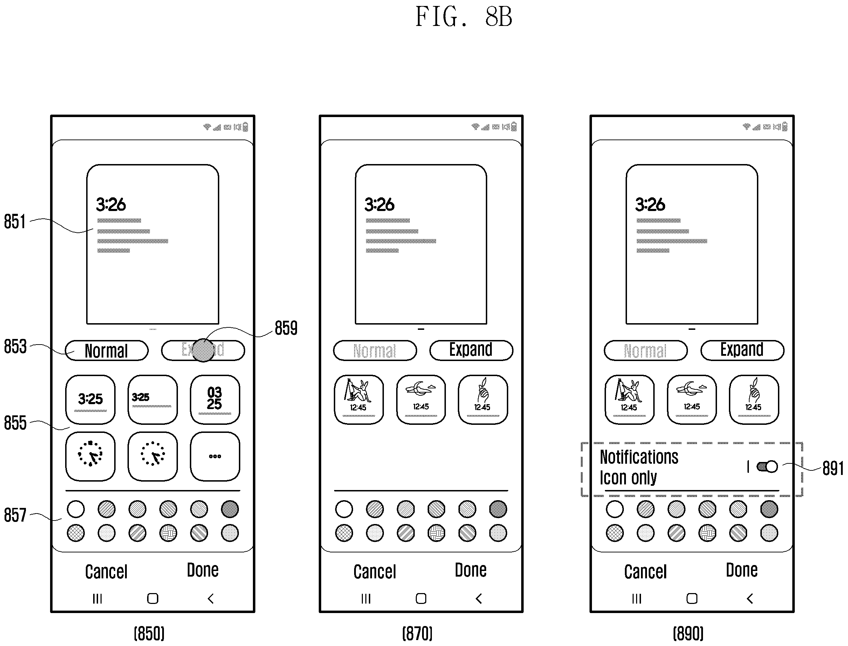

FIG. 8B illustrates an example of configuring a watch-type background screen according to a change in the state of an electronic device according to various embodiments.

Referring to FIG. 8B, the processor 120 may provide a user interface for configuring a watch-type background screen according to a change in the state of the electronic device 101. The fifth user interface 850 may include a background screen preview 851, state buttons 853 and 859, a background screen list 855, or a color list 857. If the state button 853 corresponding to the closed state of the electronic device 101 is selected, the fifth user interface 850 may be used to configure a watch-type background screen. If the open state button 859 is selected in the fifth user interface 850, the processor 120 may provide a sixth user interface 870 or a seventh user interface 890.

If the state button corresponding to the open state of the electronic device 101 is selected, the sixth user interface 870 or the seventh user interface 890 may be used to configure a watch-type background screen. The sixth user interface 870 may include a background screen preview, state buttons, a background screen list, or a color list similarly to the fifth user interface 850. The seventh user interface 890 may include a background screen preview, state buttons, a background screen list, whether notifications are to be displayed or not 891, or a color list. A toggle button may be used to indicate whether notifications are to be displayed or not 891 such that notification display is allowed (for example, notification display ON) or disallowed (for example, notification display OFF).

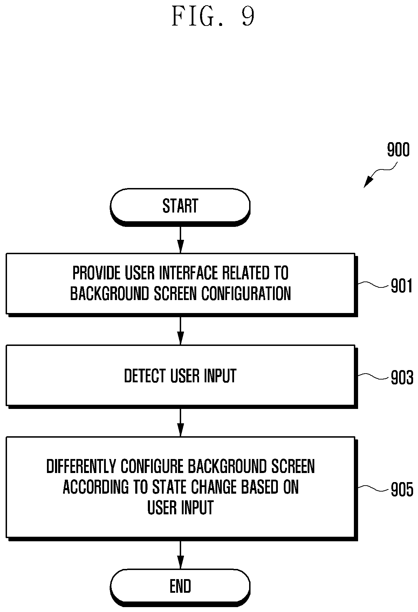

FIG. 9 is a flowchart 900 illustrating a method for configuring a background screen of an electronic device according to various embodiments.

It will be assumed in the embodiment described hereinafter that respective operations are performed by an electronic device (for example, the electronic device 101 in FIG. 1, the electronic device 200 in FIG. 2A to FIG. 2D, or the electronic device 300 in FIG. 3A to FIG. 3D) including a display expandable in the horizontal direction (for example, the flexible display 230 in FIG. 2A to FIG. 2D), or a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

Referring to FIG. 9, in operation 901, the processor (for example, the processor 120 in FIG. 1) of the electronic device 101 according to various embodiments may provide a user interface related to a background screen configuration. The processor 120 may display a user interface on the flexible display 330. The user interface may include at least one of a text, an image, an audio, or a video. Since the electronic device 101 is capable of display expansion in the vertical or horizontal direction, the display size may be changed. The processor 120 may provide a user interface for differently configuring a background screen according to a change in the state of the electronic device 101 resulting from a display size increase or decrease.

For example, the user interface may be used to provide a different configuration for each background screen according to the state of the electronic device 101, to provide a switching effect applicable to the background screen, or to configure a different background screen. The background screen may include at least one of a watch type, a notification view configuration, a home screen, a lock screen, an application shortcut, or a three-dimensional character. During a background screen configuration in relation to the watch type, the processor 120 may provide a user interface for configuring a background screen to be displayed on the lock screen, or a background screen to be displayed in a display power-save mode (for example, always on display (AOD)), respectively.

During a background screen configuration in relation to the notification view, the processor 120 may provide a user interface for configuring at least one of the image, size, or number of notifications. During a background screen configuration in relation to the home screen, lock screen, or three-dimensional character, the processor 120 may provide a user interface for configuring an image, a video, or a character to be displayed as the background screen. The switching effect may include at least one of transparency, pushing, masking, or dissipation. The processor 120 may provide a user interface for configuring a different switching effect for each background screen. For example, based on a user input, the processor 120 may configure the switching effect applied to the home screen and the switching effect applied to the lock screen differently.

According to various embodiments, the processor 120 may provide a user interface for differently configuring the application arrangement structure or ratio (or size/grid) of the background screen according to the state of the electronic device 101. Alternatively, the processor 120 may provide a user interface for differently configuring the application shortcut on the lock screen according to the state of the electronic device 101. The application frequently used by the user in the closed state of the electronic device 101 may differ from the application frequently used by the user in the open state of the electronic device 101. The processor 120 may differently provide the application list according to the state of the electronic device 101 when changing the application shortcut. The processor 120 may provide a user interface for differently configuring the facial expression, movement, or space of the three-dimensional character according to the state of the electronic device 101, or for differently applying a switching effect object related to the three-dimensional character.

In operation 903, the processor 120 may detect a user input. The processor 120 may detect a user input in the user interface related to the background screen configuration. The user input may be intended to differently configure the image or video of the background screen, to select a switching effect, or to differently apply the background screen according to each state of the electronic device 101.

In operation 905, the processor 120 may differently configure the background screen according to a state change, based on the user input. For example, based on a user input, the processor 120 may differently configure the watch type displayed in the closed state of the electronic device 101 and the watch type displayed in the open state of the electronic device 101. Alternatively, based on the user input, the processor 120 may differently configure the image (or video) displayed on the home screen or lock screen in the closed state of the electronic device 101 and the image displayed on the home screen or lock screen in the open state of the electronic device 101. The processor 120 may differently apply the switching effect which is applied during a change in the state of the electronic device 101 according to the background screen, based on the user input. Alternatively, the processor 120 may differently configure the application shortcut displayed on the lock screen in the closed state of the electronic device 101 and the application shortcut displayed on the lock screen in the open state of the electronic device 101, based on the user input.

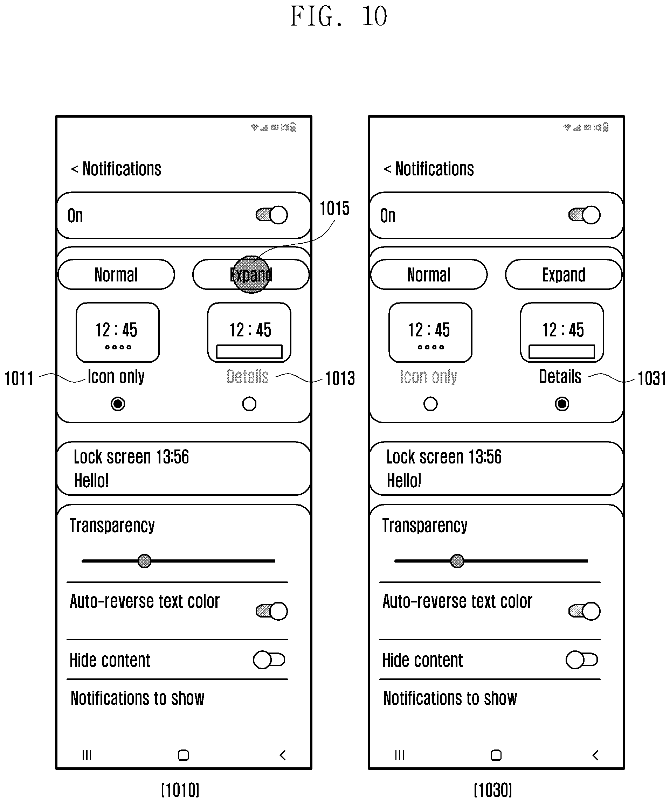

FIG. 10 illustrates an example of configuring a background screen according to a change in the state of an electronic device according to various embodiments.

Referring to FIG. 10, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the horizontal direction (for example, the flexible display 230 in FIG. 2A to FIG. 2D), or a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a user interface related to a background screen configuration (for example, display the same on the flexible display 230). The first user interface 1010 may be used to configure the background screen in the closed state of the electronic device 101 (for example, "Normal"). The display size in the closed state of the electronic device 101 is smaller than that in the open state of the electronic device 101, and the first user interface 1010 may thus be configured to display only icons 1011 in relation to viewing notifications. In addition, the processor 120 may change the notification view display according to the user's setting (for example, display icons only or display detailed information).

If the expand button 1015 is selected in the first user interface 101, the processor 120 may provide a second user interface 1030. The second user interface 1030 may be used to configure the background screen in the open state of the electronic device 101 (for example, "Expand"). The display size in the open state of the electronic device 101 is larger than that in the closed state of the electronic device 101, and the second user interface 1030 may thus be configured to display detailed information 1031 in relation to viewing notifications. In that way, the usability of the device is optimized based on a degree of expansion of the background screen.

The first user interface 101 or the second user interface 1030 may include at least one of a text, an image, an audio, or a video. The first user interface 101 or the second user interface 1030 may include at least one of a state selection button (for example, "Normal" or "Expand") for configuring the background screen according to the state of the electronic device 101, a lock screen configuration (for example, "Lock screen"), a transparency configuration, an auto-reverse text color configuration (for example, toggle (on/off) button), a hidden content configuration (for example, toggle button), or a notification view configuration ("Notification").

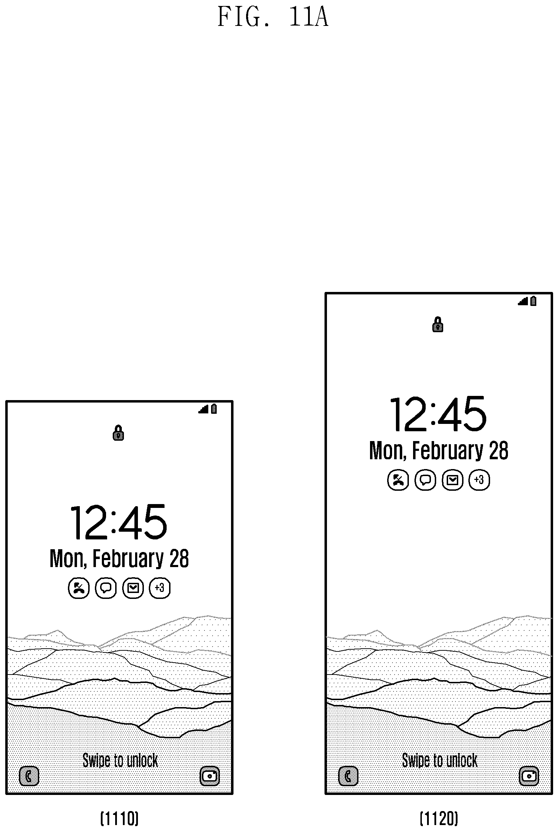

FIG. 11A illustrates an example of identically configuring a background screen according to a change in the state of an electronic device according to various embodiments.

Referring to FIG. 11A, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the horizontal direction (for example, the flexible display 230 in FIG. 2A to FIG. 2D), or a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide the same user interface regardless of a change in the state of the electronic device 101, based on the use's choice (or configuration). The processor 120 may display a user interface on the flexible display 330. For example, the first user interface 1110 may be displayed as a background screen in the closed state of the electronic device 101. The second user interface 1120 may be displayed as a background screen in the open state of the electronic device 101. The processor 120 may display the same user interface in the closed or open state of the electronic device 101 according to the user's choice. However, the ratio or layout of the background screen may be adjusted according to a change in the display size of the display. In that way, the usability of the device is optimized based on a degree of expansion of the background screen.

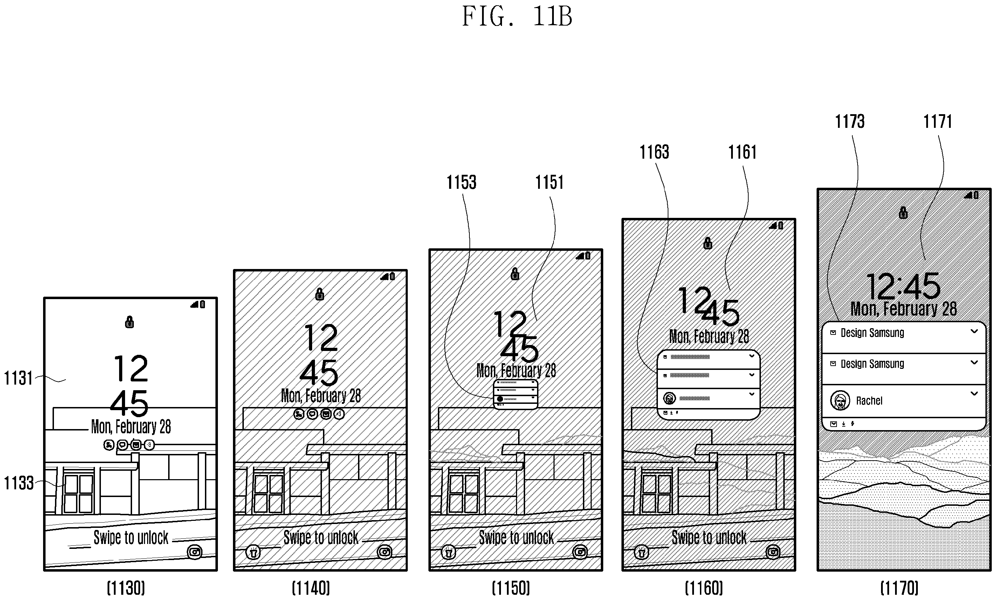

FIG. 11B illustrates an example of differently configuring a background screen according to a change in the state of an electronic device according to various embodiments.

Referring to FIG. 11B, the processor 120 may provide a different background screen according to a change in the state of the electronic device 101, based on the user's configuration (or choice). The third user interface 1130 may be provided in the closed state of the electronic device 101. The fourth user interface 1140 to the sixth user interface 1160 may be provided during a change in the state of the electronic device 101. For example, the processor 120 may provide a different background screen for each state change step during the change in the state of the electronic device 101. The fourth user interface 1140 may be a background screen provided in the first intermediate state of the electronic device 101, and may include the same background image as the third user interface 1130. The transparency of the fourth user interface 1140 may have been adjusted to inform the user of the current state change. For example, the transparency may be adjusted to increase or decrease as a change in the state of the electronic device 101 proceeds.

The fifth user interface 1150 may be a background screen provided in the second intermediate state of the electronic device 101, and may include the same background image as the fourth user interface 1140. The fifth user interface 1150 may have an adjusted transparency compared with the fourth user interface 1140, and may include first time information 1151 and first notification information 1153. The first time information 1151 may be displayed differently from the time information of the fourth user interface 1140. The first notification information 1153 may include application notification information (for example, unanswered calls or received messages) or system notification information. The fifth user interface 1150 may further include first notification information 1153, which has not been provided in the fourth user interface 1140, because the state of the electronic device 101 continuously proceeds from the first intermediate state to the second intermediate state.

The sixth user interface 1160 may be a background screen provided in the third intermediate state of the electronic device 101, and may include the same background image as the fifth user interface 1150. The sixth user interface 1160 may have an adjusted transparency compared with the fifth user interface 1150, and may include second time information 1161 and second notification information 1163. The second time information 1161 may be displayed differently from the first time information 1151 of the fifth user interface 1150 because the state of the electronic device 101 is continuously proceeding from the second intermediate state to the third intermediate state. In addition, the second notification information 1163 may have a larger size than the first notification information 1153 of the fifth user interface 1150, may have a different information display ratio, or may include more notification information.

The seventh user interface 1170 may be a background screen provided in the open state of the electronic device 101, and may include a different background image from the sixth user interface 1160. The seventh user interface 1170 may include a different background image, third time information 1171, and third notification information 1173 because the change in the state of the electronic device 101 has been completed. Alternatively, seventh user interface 1170 may include the same background screen as the previous one, even if the change in the state of the electronic device 101 has been completed, according to the user's choice. The third time information 1171 may be displayed differently from the first time information 1151 or the second time information 1161.

For example, in the case of the third time information 1171, both hours (for example, 12 o' clock) and minutes (for example, 45 minutes) may be displayed in one row, and in the case of the first time information 1151 or the second time information 1161, hours (for example, 12 o' clock) may be displayed in the first row, and minutes (for example, 45 minutes) may be displayed in the second row. The processor 120 may adjust at least one of the display size, location, or ratio of the third time information 1171 in order to display the third notification information 1173. In addition, the third notification information 1173 may be displayed differently from the first notification information 1153 or the second notification information 1163. The third notification information 1173 may have a larger size than the second notification information 1163, may have a different information display ratio, or may include more notification information.

Although FIG. 11B illustrates an example provided during a change from a closed state to an open state, the identical or similar example may be applied during a change from an open state to a closed state.

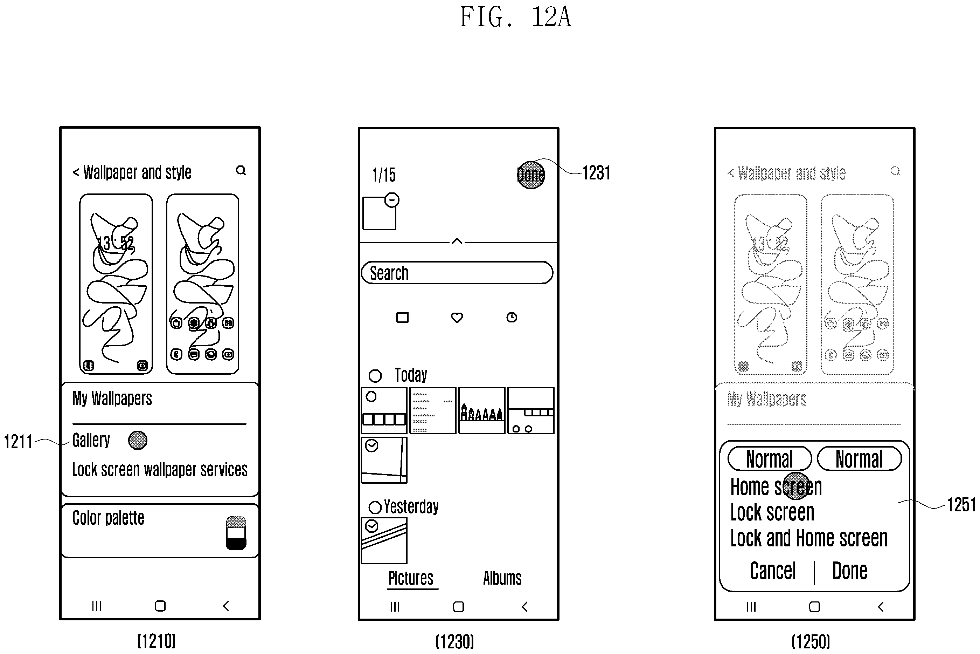

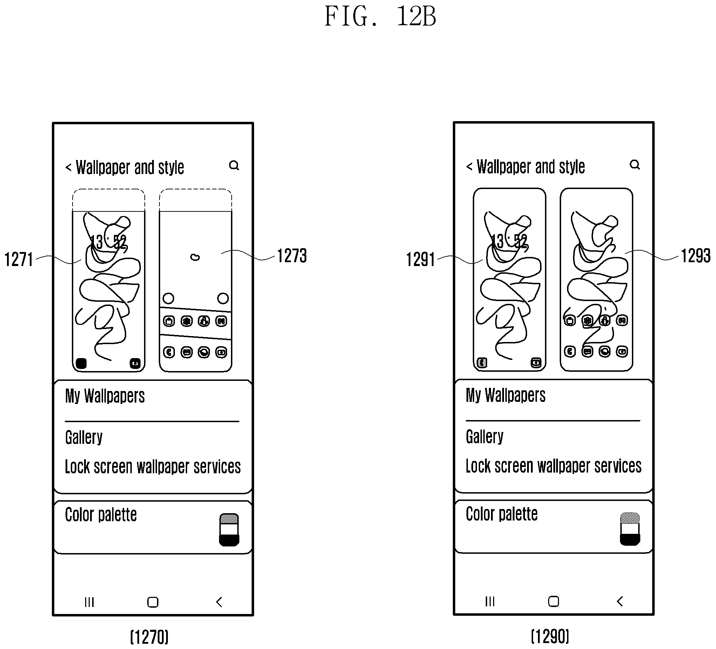

FIG. 12A and FIG. 12B illustrate an example of configuring a background screen of an electronic device according to various embodiments.

Referring to FIG. 12A and FIG. 12B, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the horizontal direction (for example, the flexible display 230 in FIG. 2A to FIG. 2D), or a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 1210 for configuring a background screen so as to be displayed differently on a lock screen or a home screen. The first user interface 1210 may include a preview region of a background screen displayed on a lock screen or a background screen displayed on a home screen, or a region for selecting a background image. The region for selecting a background image may include at least one of a "my wallpapers" region, a gallery, and a color palette. If the "my wallpapers" region is selected, the processor 120 may display a list of wallpapers registered or downloaded as the background screen. If the gallery 1121 is selected, the processor 120 may provide a second user interface 1230.

The second user interface 1230 may include an image list including at least one image (or video) stored in the memory (for example, the memory 130 in FIG. 1) of the electronic device 101. For example, the processor 120 may provide a gallery application execution screen as the second user interface 1230. If the user selects an image to be registered (or configured) as a wallpaper in the second user interface 1230, and if the completion button 1231 is selected, the processor 120 may provide a third user interface 1250.

The third user interface 1250 may include a popup window 1251 for selecting whether the selected image will be applied to the home screen, to the lock screen, or to both the home screen and the lock screen. The processor 120 may receive the user's choice of the closed state (for example, "normal") or the open state (for example, "expand") of the electronic device 101, to which the selected image is to be applied, in the popup window 1251. For example, if the selected image is to be applied to the closed state of the electronic device 101, the processor 120 may provide a fourth user interface 1270. The processor 120 may receive the user's configuration regarding the background screen in the closed state of the electronic device 101 through the fourth user interface 1270. For example, the processor 120 may receive a choice regarding whether the selected image is to be applied to the lock image 1271 or to the home screen 1273.

In addition, if the selected image is to be applied to the open state of the electronic device 101, the processor 120 may provide a fifth user interface 1290. The processor 120 may receive the user's configuration regarding the background screen in the open state of the electronic device 101 through the fifth user interface 1290. The processor 120 may receive a choice regarding whether the selected image is to be applied to the lock image 1291 or to the home screen 1293. In that way, the usability of the device is optimized based on a degree of expansion of the background screen.

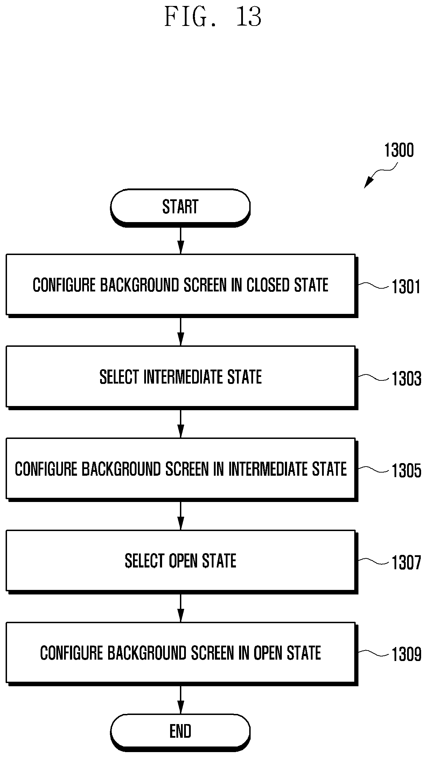

FIG. 13 is a flowchart 1300 illustrating a method for displaying a background screen according to a change in the state of an electronic device according to various embodiments.

It will be assumed in the embodiment described hereinafter that respective operations are performed by an electronic device (for example, the electronic device 101 in FIG. 1, the electronic device 200 in FIG. 2A to FIG. 2D, or the electronic device 300 in FIG. 3A to FIG. 3D) including a display expandable in the horizontal direction (for example, the flexible display 230 in FIG. 2A to FIG. 2D), or a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

Referring to FIG. 13, in operation 1301, the processor (for example, the processor 120 in FIG. 1) of the electronic device 101 according to various embodiments may have a background screen in the closed state configured therefor. For example, the processor 120 may receive the user's choice of the closed state (for example, "normal") of the electronic device 101 through a user interface for configuring the background screen. If the closed state of the electronic device 101 is selected, the processor 120 may provide a background screen displayed in the closed state in a preview type. The processor 120 may have a background screen in the closed state configured therefor, based on a user input through the user interface for configuring the background screen in the closed state of the electronic device 101.

In operation 1303, the processor 120 may select an intermediate state. The intermediate state may refer to a state of ongoing change from the closed state to the open state, or from the open state to the closed state. The processor 120 may divide the open state (for example, "expand") of the electronic device into multiple steps and may provide them as intermediate states. The open state may be divided into "expand 1" and "expand 2", and the processor 120 may have "expand 1" selected as the intermediate state. Alternatively, the open state may be divided into "expand 1", "expand 2", and "expand 2", the processor 120 may have "expand 1" selected as the first intermediate state, and may have "expand 2" selected as the second intermediate state. However, this is only an implementation issue, and does not limit the disclosure.

In operation 1305, the processor 120 may have a background screen in the intermediate state configured therefor. If the intermediate state of the electronic device 101 is selected, the processor 120 may provide a background screen displayed in the intermediate state in a preview type. The background screen in the intermediate state may be larger than the background screen in the closed state, may have an adjusted ratio or layout, or may further display notification information. The processor 120 may have a background screen in the intermediate state configured therefor, based on a user input through the user interface for configuring the background screen in the intermediate state of the electronic device 101.

In operation 1307, the processor 120 may select the open state. The open state may be divided into "expand 1" and "expand 2", and the processor 120 may have "expand 2" selected as the open state.

In operation 1309, the processor 120 may have a background screen in the open state configured therefor. If the open state of the electronic device 101 is selected, the processor 120 may provide a background screen displayed in the open state in a preview type. The background screen in the open state may be larger than the background screen in the intermediate state, may have an adjusted ratio or layout, or may display notification information with an increased size. The processor 120 may have a background screen in the open state configured therefor, based on a user input through the user interface for configuring the background screen in the open state of the electronic device 101. In that way, the usability of the device is optimized based on a degree of expansion of the background screen.

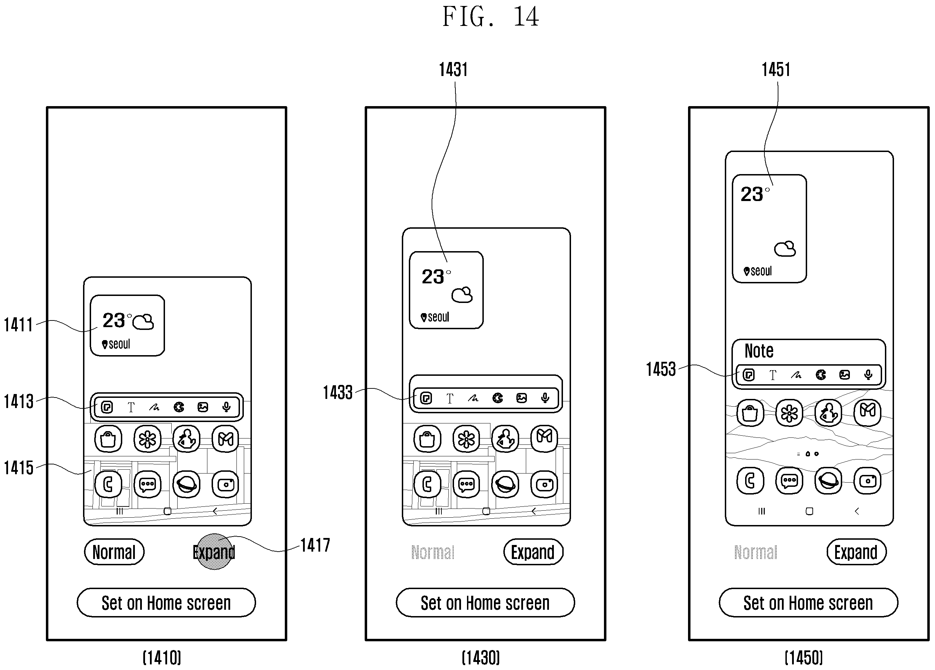

FIG. 14 illustrates an example of providing a preview such that a different background screen is displayed according to a change in the state of an electronic device according to various embodiments.

Referring to FIG. 14, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 1410 which shows a preview of a background screen in the closed state (for example, "normal") of the electronic device 101. The processor 120 may display the first user interface 1410 on the flexible display 330. The first user interface 1410, which is a widget background screen, may include at least one of first weather information 1411, first configured application information 1413, information 1415 regarding icons on which applications are disposed, or a state selection button (for example, a closed state button or an open state button). If the open state button 1417 is selected on the first user interface 1410, the processor 120 may provide a second user interface 1430 or a third user interface 1450.

According to various embodiments, the open state may be divided into "expand 1" and "expand 2", the processor 120 may provide the second user interface 1430 if the open state button 1417 is selected once, and may provide the third user interface 1450 if the open state button 1417 is selected twice. The second user interface 1430 may show a background screen preview in the intermediate state of the electronic device 101. The second user interface 1430 may include at least one of second weather information 1431, second configured application information 1433, information regarding icons on which applications are disposed, or a state selection button. The second weather information 1431 may be displayed larger than the first weather information 1411, may have an adjusted ratio, or may have additional weather information displayed. The second configured application information 1433 may be displayed larger than the first configured application information 1413, may have an adjusted ratio, or may additional information (for example, texts or images) displayed.

The third user interface 1450 may show a background screen preview in the open state of the electronic device 101. The third user interface 1450 may include at least one of third weather information 1451, third configured application information 1453, information regarding icons on which applications are disposed, or a state selection button. The third weather information 1451 may be displayed larger than the second weather information 1431, may have an adjusted ratio, or may have additional weather information displayed. The third configured application information 1453 may be displayed larger than the second configured application information 1433, may have an adjusted ratio, or may additional information displayed. In that way, the usability of the device is optimized based on a degree of expansion of the background screen.

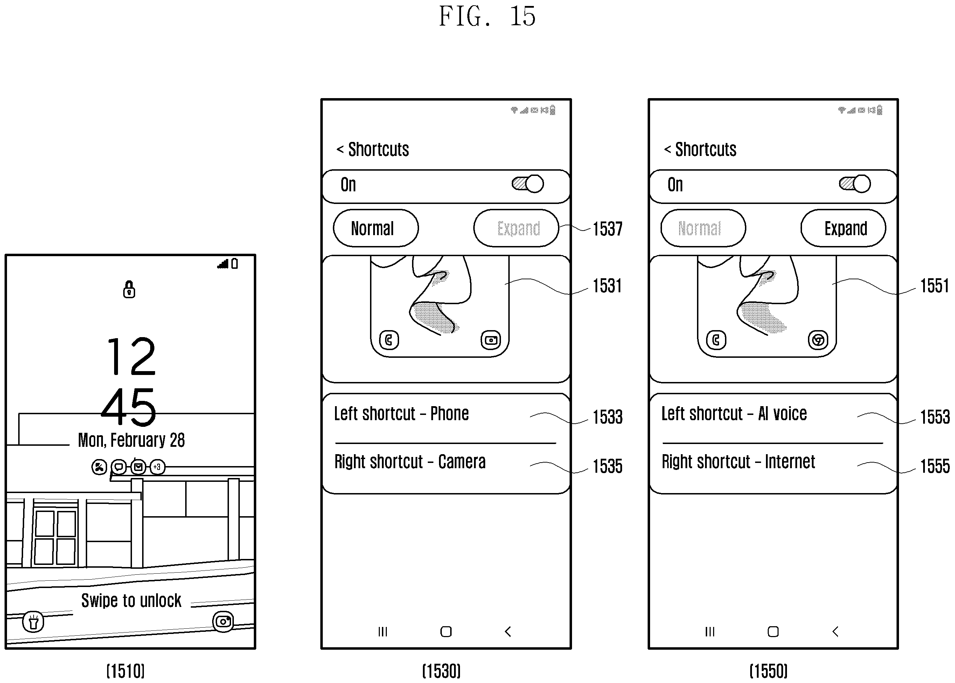

FIG. 15 illustrates an example of differently configuring application shortcuts according to the state of an electronic device according to various embodiments.

Referring to FIG. 15, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 1510 in the case of a lock screen of the electronic device 101. The first user interface 1510 may include at least one of time information (12:45) on a background image, date information (Mon, February 28), or application shortcuts. The processor 120 may provide a user interface for differently configuring application shortcuts according to the state of the electronic device 101.

The second user interface 1530 may be used to configure application shortcuts in the closed state of the electronic device 101. The second user interface 1530 may include at least one of a state selection button (for example, normal/expand), a background screen preview image 1531, a first application shortcut configuration button 1533, or a second application shortcut configuration button 1535. The first application shortcut configuration button 1533 may be used to configure an application shortcut (for example, phone) displayed on the left side of the background screen. The second application shortcut configuration button 1535 may be used to configure an application shortcut (for example, camera) displayed on the right side of the background screen. If the first application shortcut configuration button 1533 or the second application shortcut configuration button 1535 is selected, the processor 120 may provide an application list frequently used in the closed state of the electronic device 101. The processor 120 may change the application icon displayed on the background screen preview image 1531 in response to a change in the application shortcut. If the user selects the open state button 1537 on the second user interface 1530, the processor 120 may provide a third user interface 1550.

The third user interface 1550 may be used to configure application shortcuts in the open state of the electronic device 101. The third user interface 1550 may include at least one of a state selection button (for example, normal/expand), a background screen preview image 1551, a first application shortcut configuration button 1553, or a second application shortcut configuration button 1555. If the first application shortcut configuration button 1553 or the second application shortcut configuration button 1555 is selected, the processor 120 may provide an application list frequently used in the open state of the electronic device 101. The processor 120 may change the application icon displayed on the background screen preview image 1551 in response to a change in the application shortcut.

According to various embodiments, the application frequently used by the user in the closed state of the electronic device 101 may differ from the application frequently used in the open state of the electronic device 101. The processor 120 may provide a different application list according to the state of the electronic device 101 if the application shortcut is changed. For example, the application list provided through the second user interface 1530 may differ from the application list provided through the third user interface 1550.

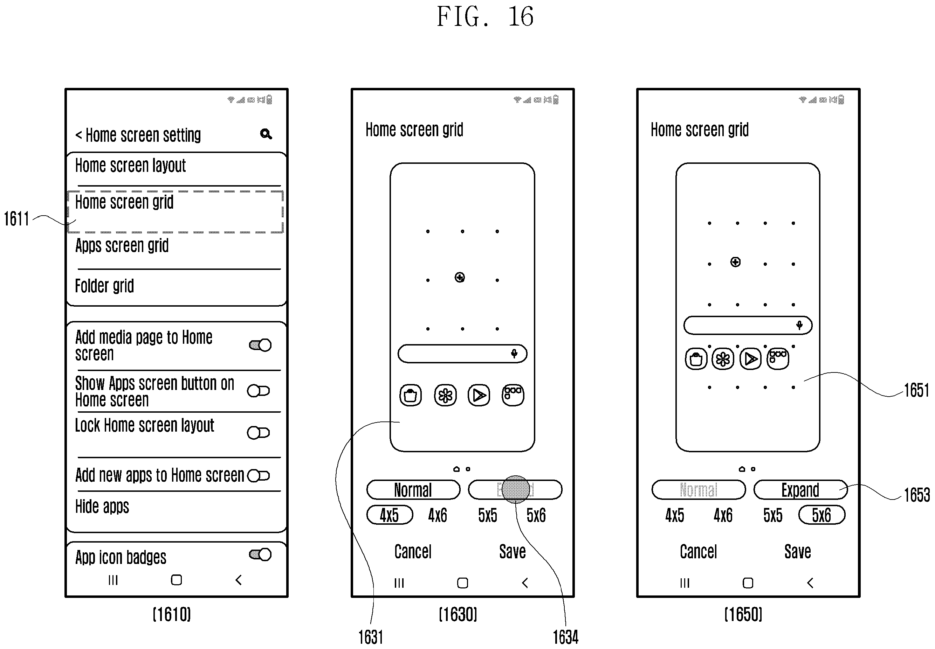

FIG. 16 illustrates an example of differently configuring a home screen grid according to a change in the state of an electronic device according to various embodiments.

Referring to FIG. 16, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a user interface for differently applying a home screen grid according to the state of the electronic device 101. The first user interface 1610 may be used to configure a background screen on a home screen. The grid may be used to configure at least one of the size, ratio, or layout structure of widget information (for example, weather information, configured application information, application icons) displayed on the home screen. If the home screen grid 1611 is selected on the first user interface 1610, the processor 120 may provide a second user interface 1630 or a third user interface 1650.

The second user interface 1630 may be used to configure the home screen grid in the closed state of the electronic device 101. The second user interface 1630 may include at least one of a first preview image 1631 of the background screen, a state selection button (for example, normal/expand), or background screen ratio information (for example, 4x5, 4x6, 5x5, 5x6). The first preview image 1631 shows an example in which the configured background screen ratio information is "4x5". The processor 120 may have one of the pieces of ratio information selected by the user on the second user interface 1630 and may accordingly configure the home screen grid in the closed state of the electronic device 101. The processor 120 may change the home screen grid displayed on the first preview image 1631 in response to the selected ratio information. If the expand button 1634 is selected on the second user interface 1630, the processor 120 may provide a third user interface 1650.

The third user interface 1650 may be used to configure the home screen grid in the open state of the electronic device 101. The third user interface 1650 may include at least one of a second preview image 1651 of the background screen, a state selection button (for example, normal/expand), or background screen ratio information (for example, 4x5, 4x6, 5x5, 5x6). The second preview image 1651 shows an example in which the configured background screen ratio information is "5x6". The processor 120 may have one of the pieces of ratio information selected by the user on the third user interface 1650 and may accordingly configure the home screen grid in the open state of the electronic device 101. The processor 120 may change the home screen grid displayed on the second preview image 1651 in response to the selected ratio information.

According to various embodiments, the open state may be divided into "expand 1" and "expand 2". The third user interface 1650 may be used to configure the home screen grid in the intermediate state of the electronic device 101, and if the open state button 1653 is selected on the third user interface 1650, the processor 120 may provide a fourth user interface (not illustrated). If the third user interface 1650 is used to configure the home screen grid in the intermediate state of the electronic device 101, the fourth user interface may be used to configure the home screen grid in the open state of the electronic device 101. For example, if the open state button is selected once, the processor 120 may provide the third user interface 1650, and if the open state button is selected twice, the processor 120 may provide the fourth user interface. However, this is only an implementation issue, and does not limit the disclosure.

FIG. 17 is a flowchart 1700 illustrating a method for displaying background screen objects according to a change in the state of an electronic device according to various embodiments.

Referring to FIG. 17, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

In operation 1701, the processor (for example, the processor 120 in FIG. 1) of the electronic device 101 may display a first background screen. The first background screen may be displayed in at least one of the closed state, the intermediate state, or the open state of the electronic device 101. It will be assumed in the following description, to help understanding of the disclosure, that the first background screen is displayed in the closed state of the electronic device 101. However, the disclosure is not limited by the assumption.

In operation 1703, the processor 120 may detect a change in the state of the electronic device 101. According to various embodiments, a change in the state of the electronic device 101 may be made through the user's manipulation or a user input. The user input may include a sound input (or voice input), or an input to a physical button visually exposed out of the housing. For example, the electronic device 200 may be switched from a closed state to an open state through an operation of the flexible display 330 pushed in a designated first direction (direction ①) through the user's manipulation. According to an embodiment, the electronic device 200 may be switched from an open state to a closed state through an operation of the flexible display 330 pushed in a designated second direction (direction ②) through the user's manipulation. According to an embodiment, the electronic device 200 may maintain an open state and/or a closed state as the first housing 310 is pressurized by a sliding hinge module (not illustrated) disposed between the first housing 310 and the second housing 320 in a direction in which the first housing 310 tends to move inward from the second housing 320 with reference to a designated inflection point, or in a direction in which the first housing 310 tends to move outward therefrom.

If the electronic device 101 is in the closed state in operation 1701, a change in the state of the electronic device 101 may be from the closed state to the open state in operation 1703. Alternatively, if the electronic device 101 is in the open state in operation 1701, a change in the state of the electronic device 101 may be from the open state to the closed state in operation 1703. If the electronic device 101 is in the intermediate state in operation 1701, a change in the state of the electronic device 101 may be from the intermediate state to the closed state, or from the intermediate state to the open state, in operation 1703. The following description of operations will be based on a change from the closed state to the open state.

In operation 1705, the processor 120 may calculate coordinate values according to the state change. The physical size of the flexible display 330 may be increased or decreased according to a change in the state of the electronic device 101. The processor 120 may calculate the space coordinate of the display region according to the change in size of the flexible display 330. The processor 120 may calculate coordinate values in real time during the change in the state of the electronic device 101. The processor 120 may calculate coordinate values during each rendering of the background screen.

In operation 1707, the processor 120 may change and display background screen objects, based on the calculated coordinate values. The processor 120 may render and display background screen objects, based on calculated coordinate values. The background screen objects may include three-dimensional characters or objects other than three-dimensional characters. The processor 120 may change and display at least one of the type, location, or animation of the background screen objects, based on the calculated coordinate values. The type of background screen objects may include the characters' facial expression or gesture. The processor 120 may apply a change in facial expression (for example, surprise, delight, excitement, happiness, horror, pain, or the like) to the three-dimensional character as a switching effect. Alternatively, the processor 120 may apply a switching effect (for example, a vibration-like movement (for example, earthquake), motion blur, speediness, particles) to the background screen of the three-dimensional character. The background screen displayed in operation 1707 may differ from the first background screen displayed in operation 1701 or the second background screen displayed in operation 1711.

According to various embodiments, the processor 120 may distinguish, among the background screen objects, objects to be changed in response to a change in the state of the electronic device 101 and objects not to be changed. The processor 120 may not change some objects (for example, 2D objects) among the background screen objects, based on the calculated coordinate values, and may change some other objects (for example, 3D objects). Alternatively, the processor 120 may change all 2D objects or 3D objects, based on the calculated coordinate values.

In operation 1709, the processor 120 may determine whether the change in the state of the electronic device 101 is completed. The processor 120 may determine whether the change in the state of the electronic device 101 is completed in order to continuously change and display background screen objects according to the change in the state of the electronic device 101. If the change in the state of the electronic device 101 is completed, the processor 120 may perform operation 1711. If the change in the state of the electronic device 101 is not completed, the processor 120 may return to operation 1705. After returning to operation 1705, the processor 120 may repeatedly perform operations 1705, 1707, and 1709 successively until the change in the state of the electronic device 101 is completed.

If the change in the state of the electronic device 101 is completed, the processor 120 may display a second background screen in operation 1711. The second background screen may differ from the first background screen displayed in operation 1701. The processor 120 may display the second background screen in response to the state of the electronic device 101. For example, if the first background screen has been displayed in the closed state of the electronic device 101 in operation 1701, the second background screen may be displayed in the open state of the electronic device 101.

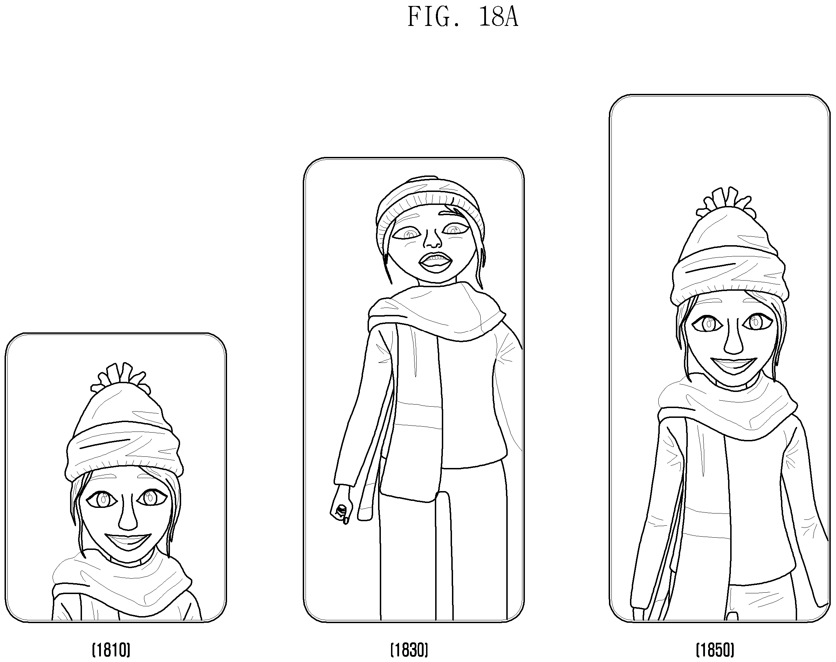

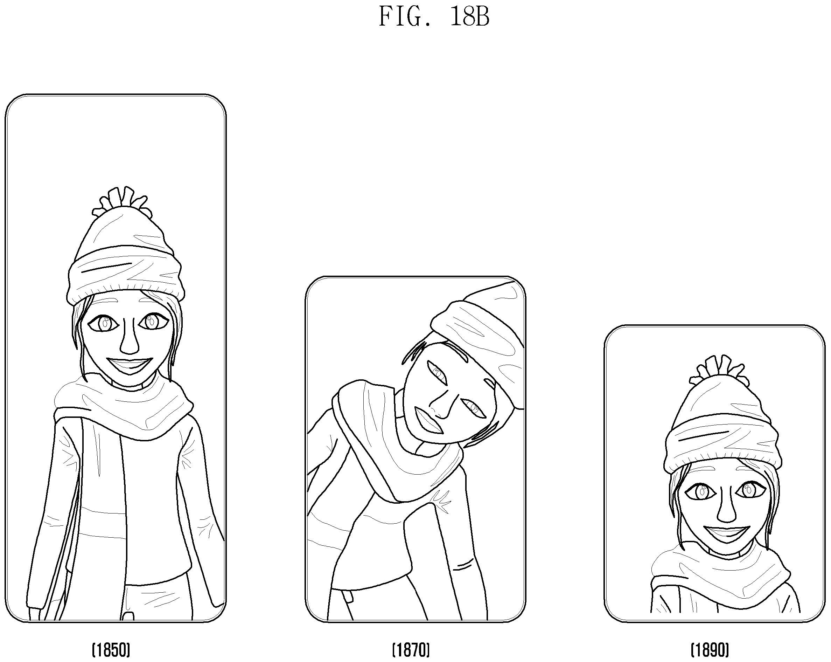

FIG. 18A and FIG. 18B illustrate an example of changing and displaying background screen objects according to a change in the state of an electronic device according to various embodiments.

Referring to FIG. 18A and FIG. 18B, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 1810 in the closed state of the electronic device 101. The processor 120 may display the first user interface 1810 on the flexible display 330. The first user interface 1810 may include a three-dimensional character. The processor 120 may detect a change in the state of the electronic device 101 while displaying the first user interface 1810.

The processor 120 may provide a second user interface 1810 during a change in the state of the electronic device 101 (for example, a change from the closed state to the open state). The second user interface 1830 may include the same three-dimensional character as the first user interface 1810 except that the shape, location, or animation of the three-dimensional character is changed.

For example, the processor 120 may change and display the shape of a specific part of the body (for example, legs, neck, or head) of the three-dimensional character in response to a change in the state of the electronic device 101. For example, the legs of the three-dimensional character may be lengthened, and the location of the three-dimensional character may be moved upward as if the three-dimensional character is pulled upward. In addition, the processor 120 may change the facial expression or gesture of the three-dimensional character in response to a change in the state of the electronic device 101. The facial expression of the three-dimensional character may correspond to a switching effect, such as surprise, delight, excitement, happiness, horror, or pain. The processor 120 may apply the switching effect to the three-dimensional character in response to a change in the state of the electronic device 101.

If the change in the state of the electronic device 101 is completed, the processor 120 may provide a third user interface 1850 in the open state of the electronic device 101. If the change in the state of the electronic device 101 is completed, the processor 120 may stop the switching effect applied to the three-dimensional character. The third user interface 1850 may include the same three-dimensional character as the first user interface 1810 except that the location of the three-dimensional character is changed. Since the display size of the flexible display 330 is increased in the open state of the electronic device 101, the location of the three-dimensional character in the third user interface 1850 may be changed, compared with the first user interface 1810, according to the increased display size.

According to various embodiments, the processor 120 may provide a different user interface according to the direction in which the state of the electronic device 101 is changed. For example, the processor 120 may detect a change in the state of the electronic device 101 while displaying the third user interface 1850 in the open state of the electronic device 101. The processor 120 may provide a fourth user interface 1870 during a change in the state of the electronic device 101 (for example, a change from the open state to the closed state). The fourth user interface 1870 may include the same three-dimensional character as the third user interface 1850 except that the shape, location, or animation of the three-dimensional character is changed. In addition, the fourth user interface 1870 may differ from the second user interface 1830 in terms of the shape, location, or animation of the three-dimensional character.

For example, if the second user interface 1830 has been displayed in the case of a change (for example, direction of expansion) of the electronic device 101 from the closed state to the open state, the fourth user interface 1870 may be displayed in the case of a change (for example, direction of reduction) of the electronic device 101 from open state to the closed state. Therefore, the processor 120 may apply a different switching effect to the three-dimensional character included in the fourth user interface 1870 from the second user interface 1840.

If a surprised facial expression has been applied to the three-dimensional character included in the second user interface 1830, the processor 120 may apply a disappointed facial expression to the three-dimensional character included in the fourth user interface 1840. Alternatively, if the three-dimensional character included in the second user interface 1830 has been expressed so as to appear to be pulled upward, and if the location of the three-dimensional character has been moved upward, the processor 120 may express the three-dimensional character included in the fourth user interface 1870 so as to appear to be pressed downward, and may display the three-dimensional character at a lower location. In that way, for the three-dimensional character the effects are naturally and simultaneously are optimized based on a degree of expansion of the background screen.

If the change in the state of the electronic device 101 is completed, the processor 120 may provide a fifth user interface 1890 in the closed state of the electronic device 101. If the change in the state of the electronic device 101 is completed, the processor 120 may stop the switching effect applied to the three-dimensional character. The fifth user interface 1890 may be identical to the first user interface 1810.

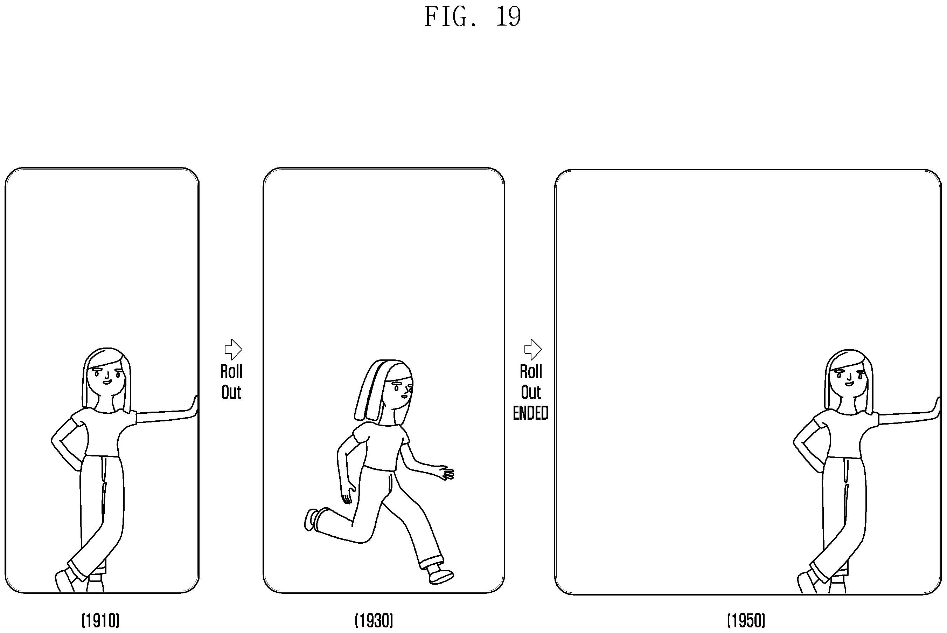

FIG. 19 illustrates another example of changing and displaying background screen objects according to a change in the state of an electronic device according to various embodiments.

Referring to FIG. 19, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 210 in FIG. 2A to FIG. 2D) and a second housing (for example, the second housing 220 in FIG. 2A to FIG. 2D) coupled to the first housing 210 to be able to move (for example, slide) in a designated direction (for example, in the y-axis direction). The state of the electronic device 101 may include a state in which the first housing 210 is contained in the inner space of the second housing 220 (for example, a closed state or a slide-in state), a state in which the first housing 210 is exposed (or moved) to the outside of the second housing 220 (for example, an open state or a slide-out state), or an intermediate state between the closed state and the open state.

The processor (for example, the processor 120 in FIG. 1) of the electronic device 101 may provide a first user interface 1910 in the closed state of the electronic device 101. The processor 120 may display the first user interface 1910 on the flexible display 230. The first user interface 1910 may include a three-dimensional character. The processor 120 may detect a change in the state of the electronic device 101 while displaying the first user interface 1910.

The processor 120 may provide a second user interface 1930 during a change in the state of the electronic device 101 (for example, a change from the closed state to the open state). The second user interface 1930 may include the same three-dimensional character as the first user interface 1910 except that the shape, location, or animation of the three-dimensional character is changed.

For example, the processor 120 may give a movement to the three-dimensional character of the second user interface 1930 as a switching effect in response to a change in the state of the electronic device 101. For example, the processor 120 may give an animation effect such that the three-dimensional character appears to be running (or walking). In addition, the processor 120 may change the movement, direction, velocity, or location of the three-dimensional character in response to a change in the state of the electronic device 101. The movement or velocity of the three-dimensional character corresponds to a switching effect, and may be applied differently according to the sliding velocity.

If the change in the state of the electronic device 101 is completed, the processor 120 may provide a third user interface 1950 in the open state of the electronic device 101. If the change in the state of the electronic device 101 is completed, the processor 120 may stop the switching effect applied to the three-dimensional character. The third user interface 1950 may include the same three-dimensional character as the first user interface 1910 except that the location of the three-dimensional character is changed. Since the display size of the flexible display 330 is increased in the open state of the electronic device 101, the location of the three-dimensional character in the third user interface 1950 may be changed, compared with the first user interface 1910, according to the increased display size.

According to various embodiments, the processor 120 may provide a different user interface according to the direction in which the state of the electronic device 101 is changed. If the second user interface 1930 has been displayed in the case of a change (for example, direction of expansion) of the electronic device 101 from the closed state to the open state, the fourth user interface (not illustrated) may be displayed in the case of a change of the electronic device 101 from open state to the closed state. The processor 120 may apply a different switching effect to the three-dimensional character included in the fourth user interface from the second user interface 1930. For example, if the three-dimensional character in the second user interface 1930 appears to be running away, the three-dimensional character in the fourth user interface may appear to be coming closer. In that way, for the three-dimensional character the effects are naturally and simultaneously are optimized based on a degree of expansion of the background screen.

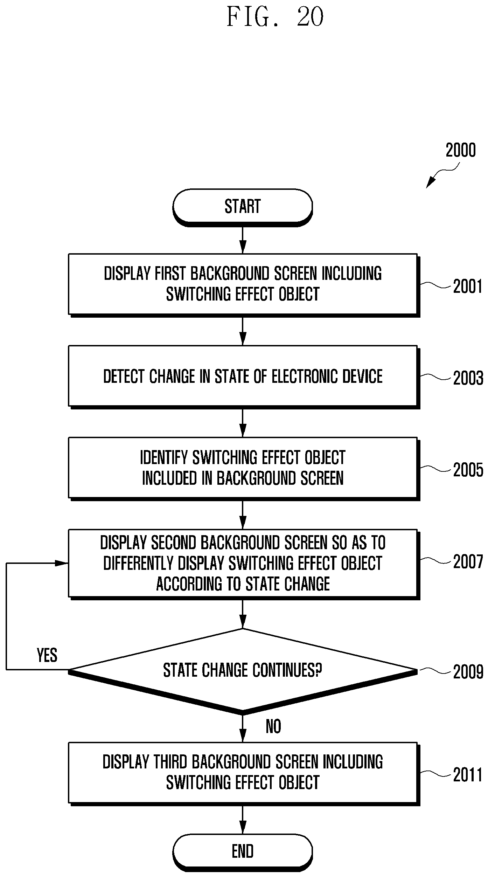

FIG. 20 is a flowchart 200 illustrating a method for differently displaying a switching effect object on a background screen according to a change in the state of an electronic device according to various embodiments.

Referring to FIG. 20, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the horizontal direction (for example, the flexible display 230 in FIG. 2A to FIG. 2D), or a display expandable in the vertical direction (for example, the flexible display 330 in FIG. 3A to FIG. 3D). For example, the electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

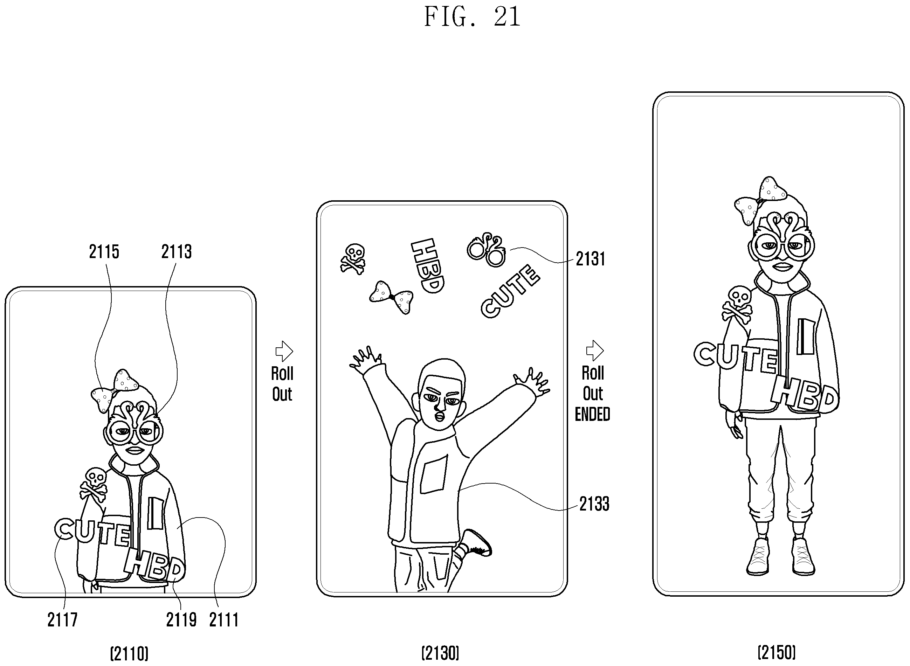

In operation 2001, the processor (for example, the processor 120 in FIG. 1) of the electronic device 101 may display a first background screen including a switching effect object on the flexible display 330. The switching effect object may be used not only to provide a switching effect to a three-dimensional character itself, but also to apply a switching effect to an object other than the three-dimensional character. For example, if the three-dimensional character is a person, the switching effect object may include a person, possessions other than the person (for example, hats, glasses, bags), or accessories (for example, hairbands, earrings, necklaces, and the like). For example, the first background screen may include the first user interface 2110 in FIG. 21.

In operation 2003, the processor 120 may detect a change in the state of the electronic device 101. According to various embodiments, a change in the state of the electronic device 101 may be made through the user's manipulation or a user input. The user input may include a sound input (or voice input), or an input to a physical button visually exposed out of the housing. For example, the electronic device 200 may be switched from a closed state to an open state through an operation of the flexible display 330 pushed in a designated first direction (direction ①) through the user's manipulation. According to an embodiment, the electronic device 200 may be switched from an open state to a closed state through an operation of the flexible display 330 pushed in a designated second direction (direction ②) through the user's manipulation. According to an embodiment, the electronic device 200 may maintain an open state and/or a closed state as the first housing 310 is pressurized by a sliding hinge module (not illustrated) disposed between the first housing 310 and the second housing 320 in a direction in which the first housing 310 tends to move inward from the second housing 320 with reference to a designated inflection point, or in a direction in which the first housing 310 tends to move outward therefrom.

In operation 2005, the processor 120 may identify a switching effect object included in the first background screen. The processor 120 may identify a switching effect object included in the background screen in order to provide a switching effect in response to a change in the state of the electronic device 101. The background screen may include a switching effect object or may include no switching effect object. If the background screen includes no switching effect object, a switching effect may be applied to the background screen. Such an embodiment may correspond to the operation in FIG. 7. If the background screen includes a switching effect object, a switching effect may be provided to the three-dimensional character itself (for example, FIG. 17), or a switching effect may be provided not only to the three-dimensional character, but also to other objects (for example, FIG. 20).

In operation 2007, the processor 120 may display a second background screen such that the identified switching effect object is displayed differently according to a change in the state of the electronic device 101. The processor 120 may calculate coordinate values according to a change in the state of the electronic device 101, and may differently apply the switching effect object, based on the calculated coordinate values. The second background screen may differ from the first background screen. The three-dimensional character or switching effect object of the first background screen may differ from the three-dimensional character or switching effect object of the second background screen in terms of the shape, location, or animation. For example, the second background screen may include the second user interface 2130 in FIG. 21.

In operation 2009, the processor 120 may determine whether the change in the state of the electronic device 101 continues or not. The processor 120 may determine whether the change in the state of the electronic device 101 continues (or has been completed) or not in order to continuously display the switching effect object differently according to the change in the state of the electronic device 101. If the change in the state of the electronic device 101 continues, the processor 120 may return to operation 2007, and if the change in the state of the electronic device 101 does not continue, may perform operation 2011. After returning to operation 2007, the processor 120 may calculate coordinate values according to the change in the state of the electronic device 101 until the change in the state of the electronic device 101 is completed, and may differently apply the switching effect object, based on the calculated coordinate values.

If the change in the state of the electronic device 101 does not continue, the processor 120 may display a third background screen including a switching effect object in operation 2011. The third background screen may be similar to the first background screen. For example, the three-dimensional character or switching effect object included in the third background screen may be similar to the first background screen except that the size is different. For example, the three-dimensional character or switching effect object included in the third background screen may be displayed larger as the display size of the flexible display 330 increases. For example, the third background screen may include the third user interface 2150 in FIG. 21. In that way, for the three-dimensional character the effects are naturally and simultaneously are optimized based on a degree of expansion of the background screen

FIG. 21 illustrates an example of differently displaying a switching effect object of a background screen according to a change in the state of an electronic device according to various embodiments.

Referring to FIG. 21, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may display a first user interface 2110 on the flexible display 330 in the closed state of the electronic device 101. The first user interface 2110 may include a three-dimensional character 2111 and switching effect objects 2113, 21115, 2117, and 2119. The processor 120 may detect a change in the state of the electronic device 101 while displaying the first user interface 2110.

The processor 120 may provide a second user interface 2130 during a change in the state of the electronic device 101 (for example, a change from the closed state to the open state). The second user interface 2130 may include the same three-dimensional character 2111 and switching effect objects 2113, 21115, 2117, and 2119 as the first user interface 2110 except that the shape, location, or animation of the three-dimensional character 2111 or the switching effect objects 2113, 21115, 2117, and 2119 is changed.

For example, the processor 120 may apply a switching effect to the three-dimensional character 2133 in response to a change in the state of the electronic device 101. For example, the processor 120 may give an animation effect such that the three-dimensional character 2133 appears to be jumping. In addition, the processor 120 may change the location of the switching effect objects 2131 in response to a change in the state of the electronic device 101. The processor 120 may give an animation effect such that the switching effect objects 2131 appear to be flying away as the three-dimensional character 2133 jumps.

If the change in the state of the electronic device 101 is completed, the processor 120 may provide a third user interface 2150 in the open state of the electronic device 101. If the change in the state of the electronic device 101 is completed, the processor 120 may stop the switching effect applied to the three-dimensional character or switching effect obj ects. The third user interface 2150 may include the same three-dimensional character and switching effect objects as the first user interface 2110 except that the location of the three-dimensional character and switching effect objects is changed. Since the display size of the flexible display 330 is increased in the open state of the electronic device 101, the location of the three-dimensional character and switching effect objects may have been moved in the third user interface 2150 in line with the increased display size, compared with the first user interface 2110.

According to various embodiments, the processor 120 may provide a different user interface according to the direction in which the state of the electronic device 101 is changed. For example, the processor 120 may provide a second user interface 2130 provided during a change of the electronic device 101 from the closed state to the open state and a fourth user interface (not illustrated) provided during a change of the electronic device 101 from the open state to the closed state differently from each other. For example, the processor 120 may apply an animation effect such that switching effect objects of the fourth user interface appear to be gathering at the center.

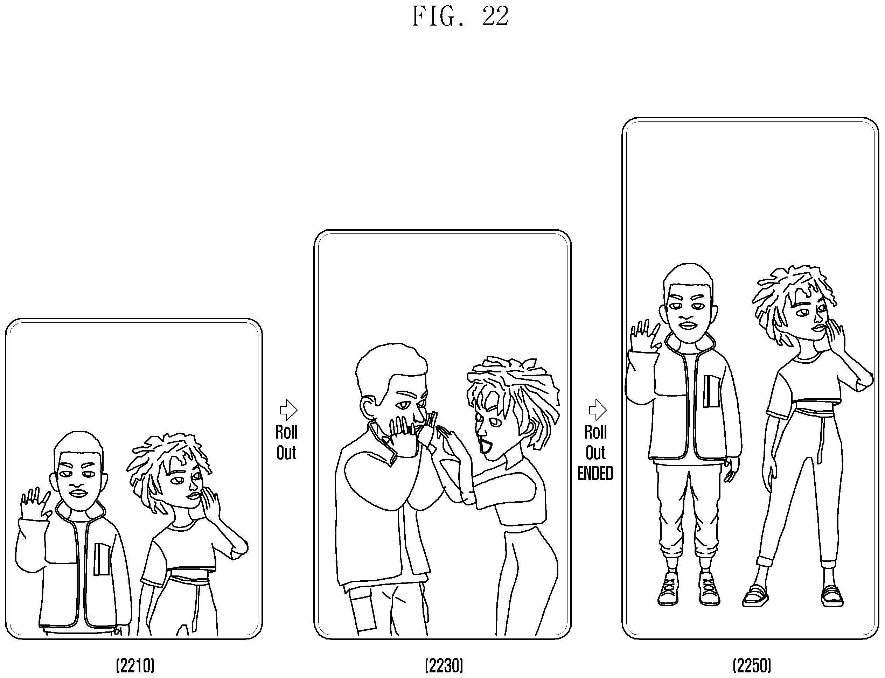

FIG. 22 illustrates another example of differently displaying a switching effect object of a background screen according to a change in the state of an electronic device according to various embodiments.

Referring to FIG. 22, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 2210 in the closed state of the electronic device 101. The processor 120 may display the first user interface 2210 on the flexible display 330. The first user interface 2210 may include three-dimensional characters. The processor 120 may detect a change in the state of the electronic device 101 while displaying the first user interface 2210.

The processor 120 may provide a second user interface 2230 during a change in the state of the electronic device 101 (for example, a change from the closed state to the open state). The second user interface 2230 may include the same three-dimensional characters as the first user interface 2210 except that the shape, location, or animation of the three-dimensional characters is changed. For example, the processor 120 may apply an animation effect such that the three-dimensional characters appear to be reluctant to move away from each other.

If the change in the state of the electronic device 101 is completed, the processor 120 may provide a third user interface 2250 in the open state of the electronic device 101. If the change in the state of the electronic device 101 is completed, the processor 120 may stop the switching effect applied to the three-dimensional characters. The third user interface 2250 may include the same three-dimensional characters as the first user interface 2210 except that the location of the three-dimensional characters is changed. Since the display size of the flexible display 330 is increased in the open state of the electronic device 101, the location of the three-dimensional characters may have been moved in the third user interface 2250 in line with the increased display size, compared with the first user interface 2210.

According to various embodiments, the processor 120 may provide a different user interface according to the direction in which the state of the electronic device 101 is changed. For example, the processor 120 may provide a second user interface 2230 provided during a change of the electronic device 101 from the closed state to the open state and a fourth user interface (not illustrated) provided during a change of the electronic device 101 from the open state to the closed state differently from each other. For example, the processor 120 may apply an animation effect such that the three-dimensional objects of the fourth user interface appear to want to stay away from each other.

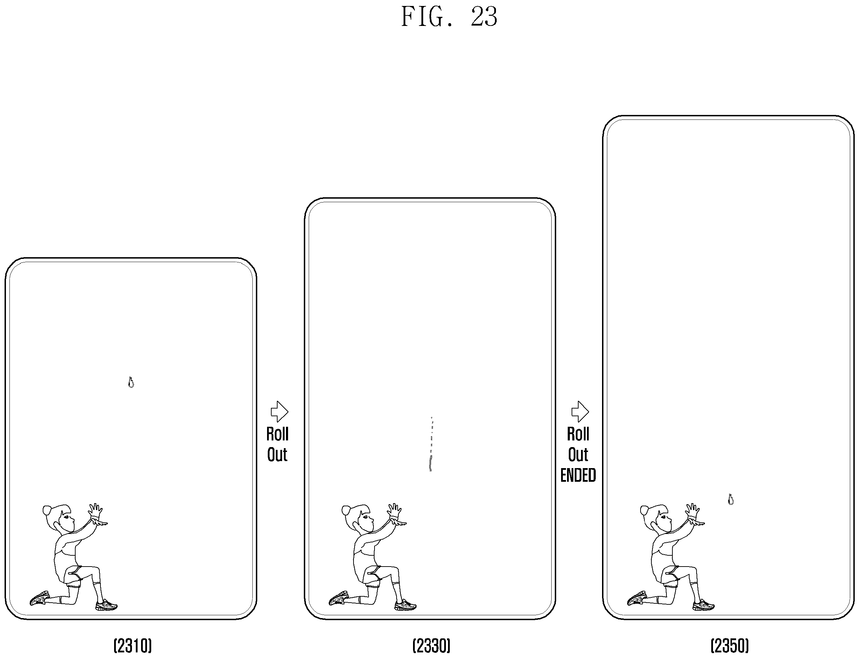

FIG. 23 illustrates an example of displaying a switching effect object of a background screen in a motion type according to a change in the state of an electronic device according to various embodiments.

Referring to FIG. 23, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 2310 in the closed state of the electronic device 101. The processor 120 may display the first user interface 2310 on the flexible display 330. The first user interface 2310 may include a three-dimensional character and a switching effect object (for example, a waterdrop). The processor 120 may detect a change in the state of the electronic device 101 while displaying the first user interface 2310.

The processor 120 may provide a second user interface 2330 during a change in the state of the electronic device 101 (for example, a change from the closed state to the open state). The second user interface 2330 may include the same three-dimensional character and switching effect object as the first user interface 2310 except that the shape, location, or animation of the three-dimensional character or the switching effect object is changed. For example, the processor 120 may apply an animation effect such that the three-dimensional character appears to flow toward the three-dimensional character. The processor 120 may apply the animation effect of the switching effect object in response to a change in the state of the electronic device 101.

According to various embodiments, the processor 120 may slowly change the movement of the switching effect object, as if the time has stopped, during a change in the state of the electronic device 101. The processor 120 may change the velocity or direction of movement of the switching effect object in response to a change in the state of the electronic device 101. In the case of a fast change in the state of the electronic device 101, the processor 120 may display the switching effect object so as to move fast, and in the case of a slow change in the state of the electronic device 101, the processor 120 may display the switching effect object so as to move slowly.

If the change in the state of the electronic device 101 is completed, the processor 120 may provide a third user interface 2350 in the open state of the electronic device 101. The third user interface 2350 may include the same three-dimensional character or switching effect object as the first user interface 2310 except that the location of the three-dimensional character and the switching effect object is changed. Compared with the first user interface 2310, the third user interface 2350 may display the switching effect object (for example, waterdrop) located close to the three-dimensional character (for example, the waterdrop falls toward the character), or may continuously provide an animation effect such that the switching effect object appears to flow toward the three-dimensional character.

According to various embodiments, the processor 120 may provide a different user interface according to the direction in which the state of the electronic device 101 is changed. For example, the processor 120 may provide a second user interface 2330 provided during a change of the electronic device 101 from the closed state to the open state and a fourth user interface (not illustrated) provided during a change of the electronic device 101 from the open state to the closed state differently from each other. For example, the processor 120 may apply an animation effect such that the switching effect object of the fourth user interface appears to move upward.

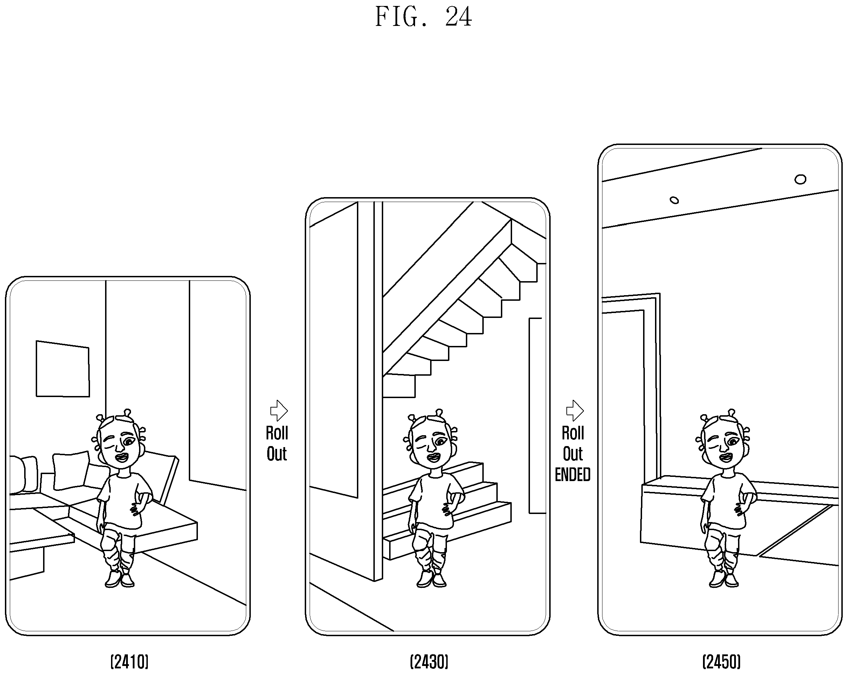

FIG. 24 illustrates another example of differently displaying a switching effect object of a background screen according to a change in the state of an electronic device according to various embodiments.

Referring to FIG. 24, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 2410 in the closed state of the electronic device 101. The processor 120 may display the first user interface 2410 on the flexible display 330. The first user interface 2410 may include a three-dimensional character displayed in a first three-dimensional space. The processor 120 may detect a change in the state of the electronic device 101 while displaying the first user interface 2410.

The processor 120 may provide a second user interface 2430 during a change in the state of the electronic device 101 (for example, a change from the closed state to the open state). The second user interface 2230 may include the same three-dimensional character as the first user interface 2410 except that the shape, location, or animation of the three-dimensional character is changed. For example, the processor 120 may apply an animation effect such that the three-dimensional character appears to move from the first three-dimensional space to a second three-dimensional space. Alternatively, the second user interface 2430 may include a three-dimensional character displayed in the second three-dimensional space.

If the change in the state of the electronic device 101 is completed, the processor 120 may provide a third user interface 2450 in the open state of the electronic device 101. The third user interface 2450 may include the same three-dimensional character as the first user interface 2410 except that the shape, location, or animation of the three-dimensional character is changed. For example, the processor 120 may apply an animation effect such that the three-dimensional character appears to move from the second three-dimensional space to a third three-dimensional space. Alternatively, the third user interface 2450 may include a three-dimensional character displayed in the third three-dimensional space.

According to various embodiments, the processor 120 may provide a different user interface according to the direction in which the state of the electronic device 101 is changed. For example, the processor 120 may provide a second user interface 2430 provided during a change of the electronic device 101 from the closed state to the open state and a fourth user interface (not illustrated) provided during a change of the electronic device 101 from the open state to the closed state differently from each other. For example, the processor 120 may apply an animation effect such that the three-dimensional character appears to move from the third three-dimensional space to a fourth three-dimensional space. In that way, for the three-dimensional character the effects are naturally and simultaneously are optimized based on a degree of expansion of the background screen.

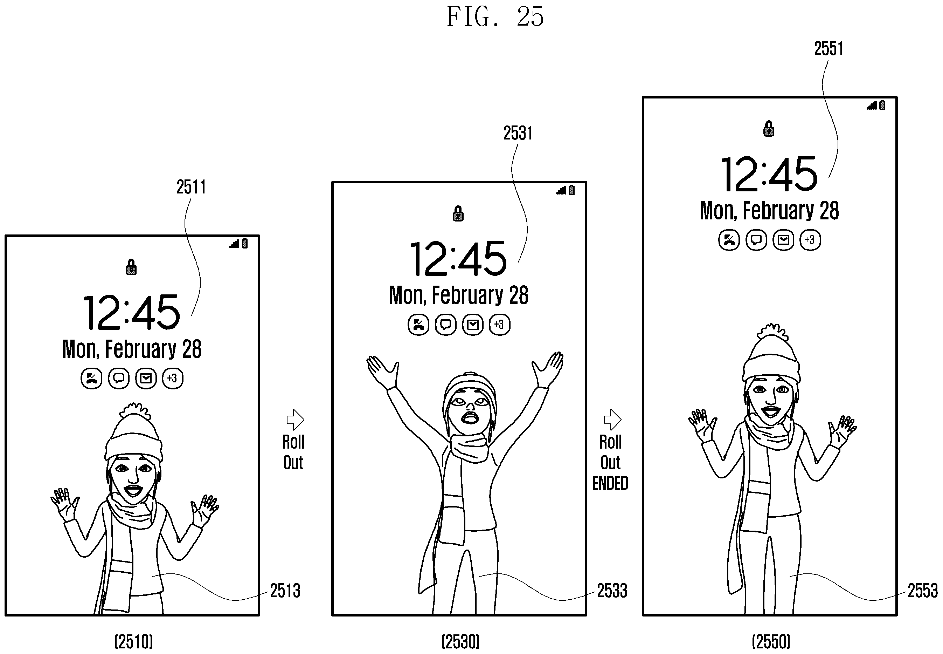

FIG. 25 illustrates another example of differently displaying a switching effect object of a background screen according to a change in the state of an electronic device according to various embodiments.

Referring to FIG. 25, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 2510 in the closed state of the electronic device 101. The processor 120 may display the first user interface 2510 on the flexible display 330. The first user interface 2510 may include two-dimensional information 2511 or a three-dimensional character 2513 displayed thereon. The two-dimensional information 2511 may include time information (12:45), date information (Mon, February 28), or notification information (for example, application icons). The processor 120 may detect a change in the state of the electronic device 101 while displaying the first user interface 2510.

The processor 120 may provide a second user interface 2530 during a change in the state of the electronic device 101 (for example, a change from the closed state to the open state). The second user interface 2230 may include the same two-dimensional information 2531 or three-dimensional character 2533 as the first user interface 2510 except that the shape, location, or animation of the three-dimensional character 2533 is changed. For example, the processor 120 may apply an animation effect such that the three-dimensional character 2533 appears to suddenly raise hands up.

If the change in the state of the electronic device 101 is completed, the processor 120 may provide a third user interface 2550 in the open state of the electronic device 101. The third user interface 2550 may include the same two-dimensional information 2551 or three-dimensional character 2553 as the first user interface 2510 except that the location of the two-dimensional information 2551 or the three-dimensional character 2553 is changed. Since the display size of the flexible display 330 is increased in the open state of the electronic device 101, the location of the two-dimensional information 2551 or the three-dimensional character 2553 may have been moved in the third user interface 2550 in line with the increased display size, compared with the first user interface 2510.

According to various embodiments, the processor 120 may provide a different user interface according to the direction in which the state of the electronic device 101 is changed. For example, the processor 120 may provide a second user interface 2530 provided during a change of the electronic device 101 from the closed state to the open state and a fourth user interface (not illustrated) provided during a change of the electronic device 101 from the open state to the closed state differently from each other.

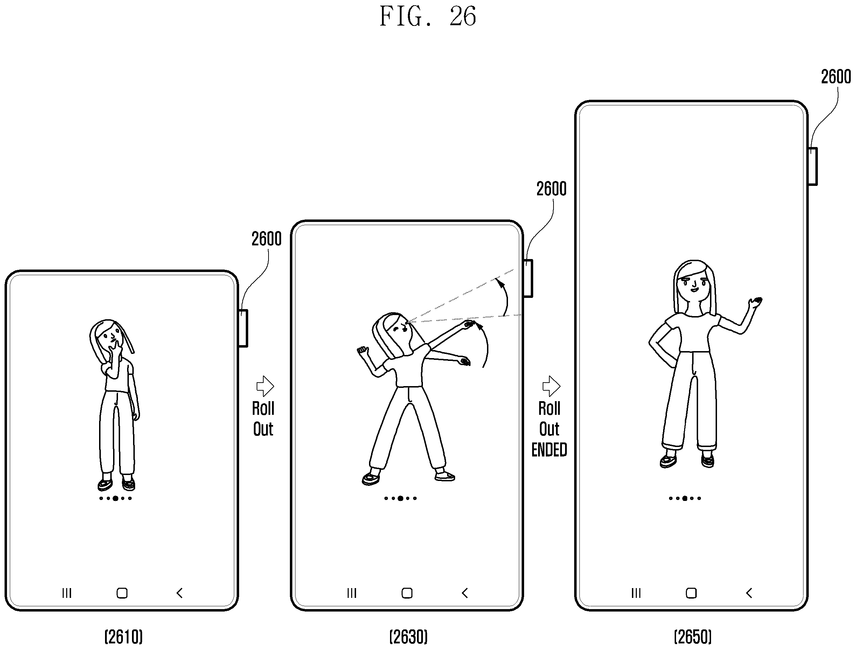

FIG. 26 illustrates an example of differently displaying a background screen in response to a physical button according to a change in the state of an electronic device according to various embodiments.

Referring to FIG. 26, an electronic device according to various embodiments (for example, the electronic device 101 in FIG. 1, the electronic device 200 in FIG. 2A to FIG. 2D, or the electronic device 300 in FIG. 3A to FIG. 3D) may include a display expandable in the vertical direction (for example, the flexible display 330 in FIG. 3A to FIG. 3D). The electronic device 101 may include a first housing (for example, the first housing 310 in FIG. 3A to FIG. 3D) and a second housing (for example, the second housing 320 in FIG. 3A to FIG. 3D) coupled to the first housing 310 to be able to move (for example, slide) in a designated direction (for example, in the y-axis direction). The state of the electronic device 101 may include a state in which the first housing 310 is contained in the inner space of the second housing 320 (for example, a closed state or a slide-in state), a state in which the first housing 310 is exposed (or moved) to the outside of the second housing 320 (for example, an open state or a slide-out state), or an intermediate state between the closed state and the open state.

The processor (for example, the processor 120 in FIG. 1) of the electronic device 101 may provide a first user interface 2610 in the closed state of the electronic device 101. The processor 120 may display the first user interface 2610 on the flexible display 330. The first user interface 2610 may include a three-dimensional character displayed in association with a physical button 2600. The physical button 2600 may be a button for changing the state of the electronic device 101, or a volume button/lock button. For example, the three-dimensional character may appear to be looking at the location at which the physical button 2600 is disposed. The processor 120 may detect a change in the state of the electronic device 101 while displaying the first user interface 2610.

The processor 120 may provide a second user interface 2630 during a change in the state of the electronic device 101 (for example, a change from the closed state to the open state). The second user interface 2230 may include the same three-dimensional character as the first user interface 2610 except that the shape, location, or animation of the three-dimensional character is changed. For example, the processor 120 may apply an animation effect such that the three-dimensional character appears to fire an arrow or point a finger at the physical button 2600. The processor 120 may calculate the interval between the physical button 2600 and the three-dimensional character in the flexible display 330, thereby giving an animation effect such that the three-dimensional character appears to look at the corresponding location or chase the same, or may change the location of the gaze of the three-dimensional character and the direction of the arm pointing at the physical button 2600 in response to a change in the state of the electronic device 101.

If the change in the state of the electronic device 101 is completed, the processor 120 may provide a third user interface 2650 in the open state of the electronic device 101. The third user interface 2650 may include the same three-dimensional character as the first user interface 2610 except that the location of the three-dimensional character is changed. Since the display size of the flexible display 330 is increased in the open state of the electronic device 101, the size or location of the three-dimensional character may have been changed in the third user interface 2650 in line with the increased display size, compared with the first user interface 2610. In that way, for the three-dimensional character the effects are naturally and simultaneously are optimized based on a degree of expansion of the background screen.

According to various embodiments, the processor 120 may provide a different user interface according to the direction in which the state of the electronic device 101 is changed. For example, the processor 120 may provide a second user interface 2630 provided during a change of the electronic device 101 from the closed state to the open state and a fourth user interface (not illustrated) provided during a change of the electronic device 101 from the open state to the closed state differently from each other.

A method for operating a sliding electronic device (for example, the electronic device 101 in FIG. 1, the electronic device 200 in FIG. 2A to FIG. 2D, or the electronic device 300 in FIG. 3A to FIG. 3D) including a flexible display (for example, the flexible display 330 in FIG. 3A to FIG. 3D), a first housing (for example, the first housing 310 in FIG. 3A to FIG. 3D) disposed in a first region of the flexible display, and a second housing (for example, the second housing 320 in FIG. 3A to FIG. 3D) configured to be able to slide with regard to the first housing and to support a second region of the flexible display, according to an embodiment of the disclosure, may include an operation of determining a state of the sliding electronic device in response to an event for background screen display, an operation of displaying a background screen, based on the state of the sliding electronic device, an operation of detecting a change in the state of the sliding electronic device, and an operation of providing a switching effect to the background screen during a change in the state of the sliding electronic device, or displaying a different background screen in response to a change in the state of the sliding electronic device. The state of the sliding electronic device may include at least one of a closed state in which the first housing is contained in an inner space of the second housing, an open state in which the first housing is exposed out of the second housing, or an intermediate state between the closed state and the open state.

The method may further include an operation of displaying a user interface associated with a background screen configuration on the flexible display, an operation of detecting a user input through the user interface, and an operation of displaying a different background screen in response to the state of the sliding electronic device, based on the user input.

The method may further include an operation of displaying a user interface for differently configuring at least one of a watch-type background screen, a notification viewing configuration, a lock screen application shortcut, or home screen ratio information, and an operation of configuring a background screen displayed in the closed state of the sliding electronic device and a background screen displayed in the open state of the sliding electronic device differently from each other, based on a user input through the user interface.

The method may further include an operation of detecting a change in the state of the sliding electronic device while displaying a first background screen, an operation of calculating a coordinate value according to the change in the state of the sliding electronic device, an operation of rendering and displaying a background screen object, based on the calculated coordinate value, and an operation of displaying a second background screen in case that the change in the state of the sliding electronic device is completed. The second background screen may be configured to be different from the first background screen.

The method may further include an operation of displaying a first background screen including a switching effect object on the flexible display, an operation of detecting a change in the state of the sliding electronic device, an operation of identifying the switching effect object included in the first background screen, an operation of displaying a second background screen such that the identified switching effect object is displayed differently according to a change in the state of the sliding electronic device, and an operation of displaying a third background screen including the identified switching effect object in case that the change in the state of the sliding electronic device is stopped.

A three-dimensional character or a switching effect object included in the first background screen may be configured to be different from a three-dimensional character or a switching effect object of the second background screen in terms of the shape, location, or animation.

Various embodiments of the disclosure provided in the specification and the drawings are only specific examples presented to easily describe the technical content of the disclosure and to help understanding of the disclosure, and are not intended to limit the scope of the disclosure. Therefore, the scope of the disclosure is to be interpreted as encompassing not only embodiments disclosed herein, but also all changed or modified forms derived based on the technical idea of the disclosure.

## Claims

1. A sliding electronic device comprising:
a flexible display;
a first housing disposed in a first region of the flexible display;
a second housing configured to be able to slide with regard to the first housing and to support a second region of the flexible display;
a memory; and
a processor operatively connected to at least one of the flexible display or the memory,
wherein the processor is configured to:
determine a state of the sliding electronic device in response to an event for background screen display;
display a background screen, based on the state of the sliding electronic device;
detect a change in the state of the sliding electronic device; and
provide a switching effect to the background screen during a change in the state of the sliding electronic device, or display a different background screen in response to a change in the state of the sliding electronic device, and
wherein the state of the sliding electronic device comprises at least one of a closed state in which the first housing is contained in an inner space of the second housing, an open state in which the first housing is exposed out of the second housing, or an intermediate state between the closed state and the open state.

2. The electronic device of claim 1, wherein the processor is configured to:
display a user interface associated with a background screen configuration on the flexible display;
detect a user input through the user interface; and
display a different background screen in response to the state of the sliding electronic device, based on the user input.

3. The electronic device of claim 1, wherein the processor is configured to:
provide a user interface for configuring a watch-type background screen to be displayed on a lock screen, or a watch-type background screen to be displayed in a display power-save mode, respectively; and
configure a watch-type background screen according to the state of the sliding electronic device, based on a user input through the user interface.

4. The electronic device of claim 1, wherein the processor is configured to:
display a user interface associated with a background screen configuration in relation to notification viewing on the flexible display; and
configure at least one of the image, size, or number of notifications corresponding to the state of the sliding electronic device, based on a user input through the user interface.

5. The electronic device of claim 1, wherein the processor is configured to:
display a user interface for differently configuring an application shortcut of a lock screen according to the state of the sliding electronic device; and
configure an application shortcut displayed on the lock screen in the closed state of the sliding electronic device and an application shortcut displayed on the lock screen in the open state of the sliding electronic device differently from each other, based on a user input through the user interface.

6. The electronic device of claim 1, wherein the processor is configured to configure, based on a user input, a first background screen displayed in the closed state of the sliding electronic device, and a second background screen displayed in the intermediate state of the sliding electronic device, and
wherein the first background screen and the second background screen comprise an identical background image and have an adjusted transparency.

7. The electronic device of claim 6, wherein the processor is configured to configure a third background screen displayed in the open state of the sliding electronic device, and
wherein the third background screen comprises a background image different from the first background screen, and further comprises notification information.

8. The electronic device of claim 1, wherein the processor is configured to:
display a user interface for differently configuring ratio information of a home screen in response to the state of the sliding electronic device; and
configure ratio information of the home screen in the closed state of the sliding electronic device to be different from ratio information of the home screen in the open state of the sliding electronic device, based on a user input through the user interface.

9. The electronic device of claim 1, wherein the processor is configured to:
detect a change in the state of the sliding electronic device while displaying a first background screen;
calculate a coordinate value according to the change in the state of the sliding electronic device; and
render and display a background screen object, based on the calculated coordinate value.

10. The electronic device of claim 9, wherein the processor is configured to change at least one of the shape, location, or animation of the background screen object, based on the calculated coordinate value, and display the background screen obj ect.

11. The electronic device of claim 9, wherein the processor is configured to display a second background screen in case that the change in the state of the sliding electronic device is completed, and
wherein the second background screen is configured to be different from the first background screen.

12. The electronic device of claim 1, wherein the processor is configured to:
display a first background screen comprising a switching effect object on the flexible display;
detect a change in the state of the sliding electronic device;
identify the switching effect object included in the first background screen; and
display a second background screen such that the identified switching effect object is displayed differently according to a change in the state of the sliding electronic device.

13. The electronic device of claim 12, wherein the processor is configured to display a third background screen comprising the identified switching effect object in case that the change in the state of the sliding electronic device is stopped.

14. The electronic device of claim 12, wherein a three-dimensional character or a switching effect object included in the first background screen is configured to be different from a three-dimensional character or a switching effect object of the second background screen in terms of the shape, location, or animation.

15. A method for operating a sliding electronic device comprising a flexible display, a first housing disposed in a first region of the flexible display, and a second housing configured to be able to slide with regard to the first housing and to support a second region of the flexible display, the method comprising:
determining a state of the sliding electronic device in response to an event for background screen display;
displaying a background screen, based on the state of the sliding electronic device;
detecting a change in the state of the sliding electronic device; and
providing a switching effect to the background screen during a change in the state of the sliding electronic device, or displaying a different background screen in response to a change in the state of the sliding electronic device,
wherein the state of the sliding electronic device comprises at least one of a closed state in which the first housing is contained in an inner space of the second housing, an open state in which the first housing is exposed out of the second housing, or an intermediate state between the closed state and the open state.
